# EUROPÄISCHE PATENTSCHRIFT

(11) **EP 4 313 648 B1**
(45) Veröffentlichungstag und Bekanntmachung des Hinweises auf die Patenterteilung: **01.04.2026**
(21) Anmeldenummer: 22710021.1
(22) Anmeldetag: 25.02.2022
(51) Int. Cl.: B60K 1/04, H01M 50/20, H01M 50/249

(54) **VORRICHTUNG, SYSTEM UND VERFAHREN ZUR HALTERUNG EINES SPEICHERS FÜR ANTRIEBSENERGIE**
DEVICE, SYSTEM AND METHOD FOR MOUNTING A STORAGE MEANS FOR DRIVE ENERGY
DISPOSITIF, SYSTÈME ET PROCÉDÉ DE MONTAGE D'UN MOYEN DE STOCKAGE D'ÉNERGIE D'ENTRAÎNEMENT

(30) Priorität: 23.03.2021 DE 102021107134
(43) Veröffentlichungstag der Anmeldung: 07.02.2024
(73) Patentinhaber: MAN Truck & Bus SE, 80995 München (DE)
(72) Erfinder: PETRASCH, Alfred, 81369 München (DE)
(74) Vertreter: v. Bezold & Partner Patentanwälte - PartG mbB
(86) Internationale Anmeldenummer: PCT/EP2022/054851
(87) Internationale Veröffentlichungsnummer: WO 2022/199985

(56) Entgegenhaltungen:
- WO-A1-2020/200459
- US-A1- 2015 037 625
- US-A1- 2020 022 278

## Beschreibung

Die Erfindung betrifft eine Vorrichtung, ein System und ein Verfahren zur Halterung eines Speichers für Antriebsenergie an einem Trägerrahmen eines Fahrzeugs sowie ein Fahrzeug mit einer solchen Vorrichtung.

Aus der Praxis ist es bekannt, die großen und schweren Hochvolt-Traktionsbatterien für elektrisch angetriebene Nutzfahrzeuge seitlich am Trägerrahmen des Nutzfahrzeugs zu befestigen. Hierfür werden die Hochvolt-Traktionsbatterien über eine Batterie-Halterung am Trägerrahmen verschraubt. Nachteilig an den aus der Praxis bekannten Ansätzen ist jedoch, dass die Batteriemontage am Band aufgrund des hohen Gewichts der Hochvolt-Traktionsbatterie und der aufwändigen Verschraubung zeitaufwändig ist.

Die WO 2020/200459 A1 zeigt diesbezüglich ein System zum Einbau von Traktionsbatterien für ein Fahrzeug mit einer vorderen und einer hinteren Halterung, die so ausgelegt sind, dass sie mit dem Reifenrahmen des Fahrzeugs verbunden werden können und aus diesem herausragen, um die Traktionsbatterie zwischen der vorderen und der hinteren Halterung aufzunehmen. Das System umfasst einen ersten und einen zweiten Schieber, die mit einer vorderen bzw. hinteren Seite der Traktionsbatterie verbunden werden können, derart, dass die Schieber mit Reifenhalterungselementen zusammengefügt werden können, wodurch die Traktionsbatterie mittels der verbundenen Schieber von den Halterungselementen aufgekommen und in Richtung des Rahmenelements des Fahrzeugs bewegt werden kann.

Es ist somit eine Aufgabe der Erfindung, eine verbesserte Technik zur Halterung eines Speichers für Antriebsenergie bereitzustellen, mit der Nachteile herkömmlicher Techniken zur Halterung vermieden werden können. Die Aufgabe der Erfindung ist insbesondere, eine schnelle Bandmontage des Speichers zu ermöglichen und vorzugsweise die Handhabung des Speichers bei der Montage und Demontage zu verbessern.

Diese Aufgaben werden durch Vorrichtungen und Verfahren mit den Merkmalen der unabhängigen Ansprüche gelöst. Vorteilhafte Weiterbildungen sind in den abhängigen Ansprüchen und der Beschreibung angegeben.

Gemäß einem ersten allgemeinen Gesichtspunkt der Erfindung wird eine Vorrichtung zur Halterung eines Speichers für Antriebsenergie an einem Trägerrahmen eines Fahrzeugs bereitgestellt. Der Trägerrahmen umfasst zwei voneinander beabstandete und über mehrere Querträger miteinander verbundene Rahmen-Längsträger. Das Fahrzeug kann ein Nutzfahrzeug, z. B. ein Lastkraftwagen, sein. In einer bevorzugten Ausführungsform ist der Speicher für Antriebsenergie ein Speicher für elektrische Energie, beispielsweise eine Hochvolt-Traktionsbatterie zur Bereitstellung elektrischer Antriebsenergie für ein Fahrzeug. Die Vorrichtung zur Halterung eines Speichers wird nachfolgend kurz auch als Haltevorrichtung bezeichnet. Der Speicher für Antriebsenergie wird nachfolgend kurz als Speicher bezeichnet.

Erfindungsgemäß umfasst die Haltevorrichtung einen ersten Halter zur Befestigung der Vorrichtung an dem Trägerrahmen und einen zweiten Halter zur Befestigung der Vorrichtung an dem Speicher, wobei der zweite Halter am ersten Halter aufschiebbar, einsteckbar und/oder einrastbar ausgebildet ist, zur Positionierung oder Vorpositionierung des ersten und zweiten Halters zueinander.

Dies bietet den Vorteil, dass eine Vormontage des ersten Halters an dem Trägerrahmen und des zweiten Halters an dem Speicher ermöglicht wird, sodass bei der Bandmontage des Speichers an den Trägerrahmen eine schnelle Befestigung ermöglicht wird, indem der am Speicher vormontierte zweite Halter lediglich in den am Trägerrahmen vormontierten ersten Halter aufgeschoben, eingesteckt und/oder eingerastet werden kann.

Die Haltevorrichtung kann somit als zweiteilige Haltevorrichtung ausgebildet sein, umfassend den ersten Halter und den zweiten Halter, wobei der erste Halter ausgebildet ist, um unabhängig vom zweiten Halter bzw. ohne den zweiten Halter (vorab) am Trägerrahmen befestigt werden zu können, und wobei der zweite Halter ausgebildet ist, um unabhängig vom ersten Halter bzw. ohne den ersten Halter (vorab) am Speicher befestigt werden zu können. Der erste Halter kann auch als erste Halterhälfte und der zweite Halter als zweite Halterhälfte bezeichnet werden. Bei der Bandmontage des Speichers am Trägerrahmen können die beiden Halterhälften ineinander zusammengeführt werden, vorzugsweise vertikal (in Fahrzeughöhenrichtung) zusammengeführt werden, was auf einfache Weise ermöglicht wird, indem der am Speicher vormontierte zweite Halter lediglich in den am Trägerrahmen vormontierten ersten Halter aufgeschoben, eingesteckt und/oder eingerastet werden kann, vorzugsweise vertikal (in Fahrzeughöhenrichtung) aufgeschoben, eingesteckt und/oder eingerastet werden kann. Hierzu können die beiden Halter jeweils entsprechend zweckmäßig ausgeführte, z. B. formkorrespondierende, Halteelemente aufweisen, die nach Art einer Schiebeführung, Steckverbindung und/oder Rastverbindung ineinander zusammenführbar sind.

Vorstehend wurde bereits festgestellt, dass zur Vorpositionierung des ersten und zweiten Halters zueinander der zweite Halter am ersten Halter aufschiebbar, einsteckbar und/oder einrastbar ausgebildet ist. Vorpositionierung zueinander bedeutet, dass die beiden Halter hierdurch in einer vorbestimmten Lage zueinander positioniert werden. Anschließend können die beiden Halter in dieser Lage optional zusätzlich verspannt, verkeilt oder anderweitig gesichert werden, was nachfolgend noch detaillierter erläutert wird. Anstelle von Vorpositionierung könnte auch von einer Positionierung des ersten und zweiten Halters zueinander gesprochen werden.

In einer Ausführungsform können der erste Halter und der zweite Halter zur Positionierung oder Vorpositionierung nach Art einer Schiebeführung ineinander schiebbar ausgebildet sein und formschlüssig ineinander zusammenführbar sein. Dies bietet den Vorteil, dass bei einer Montage eine formschlüssige Führung des zweiten Halters durch den ersten Halter vorgegeben wird, sodass eine Montage vereinfacht und eine Sicherheit erhöht wird. Der Formschluss kann zusätzlich zu einer Selbstzentrierung des ersten und des zweiten Halters beitragen.

Beispielsweise kann die Schiebeführung als nut-/federartige Schiebeführung mit einander zumindest abschnittweise hintergreifenden Flächen ausgebildet sein, vorzugsweise als Hammerkopf- oder Schwalbenschwanz-Führung. Dies bietet den Vorteil, dass die hintergreifenden Flächen eine ungewollte Bewegung der Halter zueinander, insbesondere quer zur Schiebeführung, zusätzlich verhindern und somit die Sicherheit bei einer Montage weiter erhöht wird. Alternativ können die hintergreifenden Flächen auch L-förmig ausgeführt sein. Jede weitere Form, die ein Hintergreifen ermöglicht und damit die gewollte Funktion bereitstellt und als Schiebeführung geeignet ist, ist in diesem Zusammenhang denkbar.

In einer weiteren Ausführungsform können der erste Halter und der zweite Halter an den gegenseitigen Berührungsflächen einerseits eine Einschiebenut und andererseits mindestens ein Schiebeelement aufweisen. Dies bietet den Vorteil, dass durch das mindestens eine Schiebeelement und durch die eine Einschiebenut eine klar definierte Position zwischen erstem und zweitem Halter festgelegt wird. Einer der beiden Halter bildet somit in dieser Ausführungsform die Einschiebenut aus und der andere das mindestens eine Schiebeelement. Beispielsweise kann der erste Halter die Einschiebenut ausbilden und/oder aufweisen, während der zweite Halter das mindestens eine Schiebeelement ausbildet und/oder aufweist.

In einer weiteren Ausführungsform kann das mindestens eine Schiebeelement ein Schiebeelement umfassen, dass eine senkrecht zur Schieberichtung, vorzugsweise in Fahrzeugquerrichtung, gerichtete Bewegung verhindernde Form aufweist. Dieses Schiebeelement kann z. B. einen T-förmigen, hammerkopfförmigen oder schwalbenschwanzförmigen Querschnitt aufweisen. Dies bietet den Vorteil, dass nach einer Vorpositionierung des ersten und des zweiten Halters eine Bewegung senkrecht zur Schieberichtung nicht mehr möglich ist, sodass nach einer Vorpositionierung ein Herausfallen des zweiten Halters aus dem ersten Halter nicht mehr möglich ist, wodurch ein Stützen oder Absichern des zweiten Halters nicht mehr nötig ist.

Alternativ kann die eine in Fahrzeugquerrichtung gerichtete Bewegung verhindernde Form des Schiebeelements nur einseitig ausgeführt sein, z. B. über ein L-förmiges Schiebeelement. Dies bietet den Vorteil, dass die Konstruktion des Schiebeelements und die dazu passende Gegenseite vereinfacht werden kann und somit Kosten gespart werden können. Alternativ ist denkbar, dass das Schiebeelement eine hakenförmige Form im Querschnitt aufweist, beidseitig oder einseitig ausgeführt.

Alternativ oder zusätzlich kann das mindestens eine Schiebeelement ein Schiebeelement umfassen, das eine plane Kontaktfläche aufweist, die im in der Einschiebenut eingesetzten Zustand des Schiebeelements flächig an einer korrespondierenden Kontaktfläche der Einschiebenut anliegt, wobei sich die plane Kontaktefläche in einer Ebene erstreckt, die parallel zur Schieberichtung und schräg zu einer Breiten- und Tiefenrichtung des ersten und zweiten Halters verläuft. Ferner kann der erster Halter und der zweite Halter ein längliches Bauteil ausbilden, wobei die Schieberichtung längs und/oder parallel zu einer Längsachse des ersten und zweiten Halters verläuft. Die Breitenrichtung kann in einem montierten Zustand der Vorrichtung an einem Rahmenlängsträger in Fahrzeuglängsrichtung und die Tiefenrichtung in Fahrzeugquerrichtung verlaufen, sodass sowohl die Breitenrichtung als auch die Tiefenrichtung senkrecht zur Längsachse und damit Schieberichtung verlaufen. Ferner kann die plane Kontaktfläche eine schräge Fläche ausbilden, welche an den korrespondierenden Flächen der Einschiebenut des ersten Halters formschlüssig anliegt und dadurch eine Bewegung in Fahrzeuglängsrichtung verhindert.

In einer weiteren Ausführungsform kann das mindestens eine Schiebeelement ein Schiebeelement mit einer Anschlagsfläche umfassen, das zur Vorpositionierung des ersten und zweiten Halters zueinander von einem in der Einschiebenut angeordneten Arretierelement mit korrespondierender Anschlagfläche arretierbar ist, was einer Vorpositionierung in Schieberichtung entspricht. Hierbei können die Anschlagflächen im vorpositionierten Zustand flächig aneinander anliegen und sich jeweils in einer Ebene erstrecken, die schräg zur Schieberichtung ist.

Dies bietet den Vorteil, dass eine festgelegte Position in Schieberichtung vorgegeben wird, sodass bei einem Einschieben der Halter eine festgelegte (Endeinschiebe-)Position zwischen erstem und zweiten Halter definiert wird. Ferner ist vorteilhaft, dass die Anschlagflächen im vorpositionierten Zustand flächig aneinander anliegen und sich jeweils in einer Ebene erstrecken, die schräg zur Schieberichtung ist, sodass in einem vorpositionierten Zustand eine bereits durch das Einschieben hervorgerufene Verkeilung des zweiten und ersten Halters stattfindet.

In einer weiteren Ausführungsform kann die Vorrichtung ferner eine Spanneinrichtung zur Fixierung, zur Verspannung und/oder zur Kompensation von Setzverlusten des ersten und zweiten Halters im zueinander vorpositionierten Zustand umfassen. Dies bietet den Vorteil, dass die ineinandergeschobenen Halter nach Fixierung oder Verspannung nicht entgegen der Einschieberichtung wieder auseinanderrutschen können. Ferner bietet die Spanneinrichtung den Vorteil, dass z. B. durch Vibrationen hervorgerufene Setzverluste, durch welche die Halter noch weiter in Einschieberichtung ineinandergleiten oder versetzt werden, durch entsprechende Mittel kompensiert werden können.

In einer weiteren Ausführungsform kann die Spanneinrichtung ausgebildet sein, den zweiten Halter in einer Einschiebenut, vorzugsweise einer T-Nut oder Schwalbenschwanz-Nut, des ersten Halters zu verspannen. Dies bietet den Vorteil, dass eine stabile Fixierung des zweiten Halters im ersten Halter ermöglicht wird.

In einer Ausführungsvariante kann die Spanneinrichtung eine Vorspanneinrichtung umfassen, die vorzugsweise als Tellerfeder oder als Tellerfederpaket ausgeführt ist, zur Aufrechterhaltung der Verspannung und/oder Verkeilung des ersten und zweiten Halters, beispielsweise bei Auftreten von Setzverhalten im Fahrzeugbetrieb. Dies bietet den Vorteil, dass durch die Vorspanneinrichtung eine definierte Kraft in der Spanneinrichtung in Form von potentieller Energie einer z. B. komprimierten Tellerfeder gespeichert wird, sodass die bereits erwähnten Setzverluste durch ein Nachdrücken durch die Spanneinrichtung zuverlässiger ausgeglichen werden können. Alternativ zur Tellerfeder ist auch der Einsatz mindestens einer Schraubendruckfeder möglich oder sonstiger geeigneter Mittel, die eine vergleichbare Wirkung erzeugen.

In einer weiteren Ausführungsvariante kann die Spanneinrichtung ein Druckstück und eine das Druckstück beaufschlagende Schraube umfassen, wobei vorzugsweise das Druckstück im verspannten Zustand gegen mindestens eine Schrägkante des ersten und/oder zweiten Halters drückt, um den ersten und zweiten Halter gegeneinander zu verkeilen und/oder zu verspannen. Dies bietet den Vorteil, dass durch die Schraube eine definierte Kraft eingebracht werden kann, sodass das Druckstück mit einer einstellbaren Kraft gegen die Schrägkante des ersten und/oder zweiten Halters drückt. Ferner wird eine kostengünstige und baulich kompakte Realisierung einer Spanneinrichtung ermöglicht. Ein weiterer Vorteil der das Druckstück beaufschlagenden Schraube ist, dass vorzugsweise sämtliche in vertikaler Richtung auftretenden Toleranzen zwischen dem ersten und dem zweiten Halter sowie dem Druckstück ausgeglichen werden können.

Ferner kann die Spannvorrichtung mit dem Druckstück und mit dem Tellerfederpaket die Funktion aufweisen, dass beim Verspannen des zweiten Halters in einem vorpositionierten Zustand in einem oberen Bereich des ersten Halters das Druckstück gegen die hintergreifenden Flächen der Schiebeführung, vorzugsweise gegen die L-Profile der Schwalbenschwanznut und/oder T-Nut und/oder der nut-/federartigen Schiebführung, des ersten Halters verspannt wird. Ferner können die hintergreifenden Flächen der Schiebeführung und/oder die L-Profile der T-Nut so dimensioniert und ausgelegt sein, dass diese die kompletten Belastungen der Verspannung aufnehmen können.

In einer möglichen weiteren Ausführungsvariante kann die das Druckstück beaufschlagende Schraube in einer ein Innengewinde oder eine Hülse mit einem Innengewinde umfassenden Schraubenhalterung gehaltert sein. Die Schraubenhalterung kann an dem ersten oder zweiten Halter lösbar befestigbar sein und/oder befestigt sein, wobei das Druckstück auf den ersten oder zweiten Halter im durch die Schraube beaufschlagten Zustand eine Druckkraft auf eine in Bezug zur Schieberichtung schräge Druckfläche des ersten oder zweiten Halters Druck ausübt bzw. ausüben kann, sodass eine Kraft in Schieberichtung und quer zur Schieberichtung zum Verkeilen und/oder Verspannen des ersten und des zweiten Halters einbringbar ist oder eingebracht wird. Dies bietet den Vorteil, dass durch Aufbringen einer Kraft durch die Schraube auf das Druckstück eine definierte Verspannung und/oder Fixierung des ersten und des zweiten Halters ermöglicht wird. Diese Ausführungsvariante der Spanneinrichtung kann an einem oberen Ende der Haltevorrichtung angeordnet sein.

Ferner kann zwischen der das Druckstück beaufschlagenden Schraube und dem Tellerfederpaket sowie dem Druckstück eine Kugelausgleichs-Scheibe eingebaut sein, welche Schiefstellungen und/oder Winkelabweichungen zwischen der das Druckstück beaufschlagenden Schraube und dem Druckstück ausgleicht. Dies bietet den Vorteil, dass die das Druckstück beaufschlagende Schraube in jeder Einbaulage definiert mit einer gesamten stirnseitigen und zum Tellerfederpaket und/oder Druckstück gewandten Druckfläche Druck auf das Tellerfederpaket und/oder Druckstück ausüben kann.

In einer alternativen Ausführungsvariante der vorgenannten Ausführungsform kann das Druckstück eine im Querschnitt V-förmige Ausnehmung mit zwei gegenüberliegenden schrägen Druckflächen aufweisen und die das Druckstück beaufschlagende Schraube eine Dehnschraube sein, welche sich in Schieberichtung erstreckt, wobei das Druckstück in Schieberichtung durch die V-förmige Ausnehmung über die zwei schrägen Druckflächen flächig Druck auf korrespondierende Druckflächen des ersten und des zweiten Halters zum Verkeilen und/oder Verspannen des ersten und des zweiten Halters ausübt.

Dies bietet den Vorteil, dass die Dehnschraube Setzverluste kompensieren kann, wobei kein zusätzliches Bauteil in der Form z. B. einer Tellerfeder benötigt wird, um Setzverluste zu kompensieren, weil die Dehnschraube selbst als Zugfeder fungiert.

Vorstehend wurde bereits festgestellt, dass der Trägerrahmen zwei voneinander beabstandete und über mehrere Querträger miteinander verbundene Rahmen-Längsträger, vorzugsweise C-Profilträger, umfasst. Derartige Trägerrahmen kommen üblicherweise als Fahrgestell-Rahmen bei Nutzfahrzeugen, z. B. Lastkraftwagen, zum Einsatz. Hierbei ist der erste Halter zur Befestigung am Rahmen-Längsträger ausgebildet, wobei zur Vorpositionierung des ersten und zweiten Halters zueinander der zweite Halter auf dem am Rahmen-Längsträger befestigten ersten Halter in Vertikalrichtung, entsprechend der Fahrzeughöhenrichtung, von oben aufschiebbar, einsteckbar und/oder einrastbar ausgebildet ist.

Dies bietet den Vorteil, dass nach Aufschieben, Einstecken und/oder Einrasten des ersten Halters in den zweiten Halter in Vertikalrichtung der erste Halter bereits im vorpositionierten Zustand ist und nicht mehr in Fahrzeugquerrichtung herauskippen kann. Aufgrund der vertikalen Abwärtsbewegung des zweiten Halters in den ersten Halter ermöglicht die Gravitationskraft bereits eine sichere Positionierung der Halter im vorpositionierten Zustand.

Weiter umfasst der erste Halter ein an einem unteren Endbereich lösbar befestigtes Arretierelement, das einen Anschlag und/oder eine Anschlagfläche für den zweiten Halter bei der Vorpositionierung ausbildet, wobei das Arretierelement im gelösten, vorzugsweise entfernten, Zustand eine Entnahme des im ersten Halter aufgeschobenen, eingesteckten und/oder eingerasteten zweiten Halters in Vertikalrichtung nach unten ermöglicht.

Dies bietet den Vorteil, dass bei Bedarf eine Entnahme des zweiten Halters mit daran befestigtem Speicher, z. B. für den Austausch eines Speichers oder zur Wartung eines Speichers, auf einfache Weise und schnell ermöglicht wird, ohne den ersten Halter vom Rahmen-Längsträger lösen zu müssen. Dies ist besonders vorteilhaft, da bei bereits montierter Fahrzeugbatterie die Verschraubung des ersten Halters am Rahmen-Längsträger in der Regel schwer zugänglich ist.

In einer Ausführungsvariante dieser Ausführungsform kann das lösbar befestigte Arretierelement einen entnehmbaren Bolzen umfassen, der das in der Einschiebenut angeordnete Arretierelement, wie es vorstehend als Ausführungsform eines Schiebeelements beschrieben wurde, ausbildet oder trägt. Der Bolzen hat somit eine Doppelfunktion: Einerseits dient er als bzw. bildet er ein Arretierelement bzw. einen Anschlag aus oder trägt ein solches Arretierelement, um eine definierte Endposition bzw. Vorpositionierung beim Ineinander-Zusammenführen von erstem und zweitem Halter zu ermöglichen. Andererseits ermöglicht der Bolzen eine schnelle Entnahme des gehalterten Speichers im Service-Fall nach unten.

Beispielsweise kann der entnehmbare Bolzen das in der Einschiebenut angeordnete Arretierelement (selbst) ausbilden, dessen korrespondierende Anschlagfläche durch eine sich in Bolzenlängsrichtung erstreckende Fläche gebildet wird. Zur Ausbildung dieser Anschlagfläche kann der Bolzen eine sich in Bolzenlängsrichtung erstreckende plane oder abgeflachte Fläche aufweisen, sodass der Bolzen keinen runden Querschnitt aufweist. Dies bietet den Vorteil einer konstruktiv einfachen Ausführungsform, indem der Bolzen direkt eine korrespondierende Anschlagfläche bildet.

Ferner kann der entnehmbare Bolzen vorzugsweise quer zur Schieberichtung in zwei Löchern in zwei äußeren Schenkeln des ersten Halters gehaltert sein und die den entnehmbaren Bolzen halternden zwei Löcher ein kreisrundes Profil aufweisen. Ferner kann das Schiebeelement des zweiten Halters mittig zwischen den Schenkeln bei der Vorpositionierung positioniert sein. Ferner kann der entnehmbare Bolzen an äußeren Abmaßen der Schenkel bzw. seitlich außen an den Schenkeln des ersten Halters überstehen und eine Verliersicherung und/oder Fixierung des entnehmbaren Bolzens aufweisen. Die Verliersicherung kann durch ein Durchgangsloch oder eine Nut mit einem darin gehalterten Halteblech im überstehenden Bereich des Bolzens gebildet sein.

In der Ausführungsvariante, in der die Verliersicherung die Nut und das Halteblech aufweist, kann die Nut in dem entnehmbaren Bolzen so eingebracht sein, dass bei Eingreifen es Halteblechs in die Nut die Anschlagsfläche des Bolzens in einem 45° Winkel in Bezug zur Einschieberichtung ausgerichtet ist. Mit anderen Worten kann das Halteblech als axiale Sicherung des Bolzens dienen und dafür sorgen, dass die Anschlagfläche des entnehmbaren Bolzens, auf der der zweite Halter im vorpositionierten Zustand aufliegt, bereits in einer Neigung von ca. 45° voreingestellt wird und dadurch die richtige Lage des Bolzens sichergestellt ist. Ferner kann das Halteblech an dem Schenkel lösbar befestigt sein, zum Beispiel verschraubt sein.

Anstatt das in der Einschiebenut angeordnete Arretierelement selbst auszubilden, kann in einer alternativen Ausführungsvariante der entnehmbare Bolzen das in der Einschiebenut angeordnete Arretierelement tragen, das als ein entnehmbares Auflagestück durch den entnehmbaren Bolzen drehbar gehaltert ist. Dies bietet den Vorteil, dass das entnehmbare Auflagestück eine größere Auflagefläche bieten kann als in der Ausführungsform, in der der Bolzen direkt die Auflagefläche bietet.

Ferner kann der entnehmbare Bolzen an seinen Endbereichen einen abgeflachten Bereich in Bolzenlängsrichtung aufweisen und der entnehmbare Bolzen über zwei vertikale Langlöcher in zwei Schenkeln des ersten Halters gehaltert sein. Ferner kann das entnehmbare Auflagestück zwischen den zwei Schenkeln positioniert sein und beide Schenkel des ersten Halters vertikale Gewindebohrungen an der Unterseite aufweisen, die in die den entnehmbaren Bolzen halternden vertikalen Langlöcher der zwei Schenkel ragen. Ferner kann eine Verliersicherung und/oder Fixierung des entnehmbaren Bolzens durch zwei Schrauben erfolgen, die in die vertikalen Gewindebohrungen eingeschraubt sind und den entnehmbaren Bolzen jeweils an den abgeflachten Bereichen berühren und vertikal an das obere Ende der Langlöcher fixieren.

Dies bietet den weiteren Vorteil, dass nach einer Demontage des zweiten Halters und Speichers, indem der entnehmbare Bolzen mit entnehmbarem Auflagestück entnommen wurde und der zweite Halter vertikal nach unten herausgeführt wurde, eine Remontage, also eine erneute Montage des Speichers über den zweiten Halter erfolgen kann. Dies erfolgt dann wieder durch eine vertikale Bewegung von unten in den ersten Halter hinein und durch erneutes Einsetzen des entnehmbaren Bolzens mit entnehmbarem Auflagestück. Hierbei wird ein Verspannen und/oder Fixieren durch Einschrauben der Schrauben in die vertikalen Gewindebohrungen ermöglicht, indem der entnehmbare Bolzen mit dem entnehmbaren Auflagestück in vertikale Richtung von unten bis an das Ende der vertikalen Langlöcher bewegt und fixiert wird.

In einer weiteren Ausführungsform kann der erste Halter, um diesen und die Vorrichtung an dem Trägerrahmen zu befestigen, und der zweite Halter, um diesen und die Vorrichtung an dem Speicher zu befestigen, jeweils an ihren außenliegenden Seitenbereichen rasterförmig angeordnete, Durchgangsöffnungen aufweisen, in welchen jeweils, sich durch die korrespondierenden Durchgangsöffnungen erstreckende, Befestigungsmittel zur kraftschlüssigen und/oder formschlüssigen Fixierung des ersten Halters am Trägerrahmen und des zweiten Halters am Speicher aufnehmbar sind. Dies bietet den Vorteil, dass der erste Halter und der zweite Halter unabhängig voneinander sicher am Trägerrahmen bzw. am Speicher befestigt werden können, bevor ein Ineinanderschieben des zweiten Halters in den ersten Halter erfolgt.

Der erste und/oder zweite Halter können jeweils zwei äußere Schenkel aufweisen, die jeweils die außenliegenden Seitenbereiche mit rasterförmig angeordneten Durchgangsöffnungen ausbilden. Ferner können die Schenkel über vertikale rippenförmige Verstärkungen versteift und/oder verfestigt werden. Ferner können die vertikalen rippenförmigen Verstärkungen an äußeren Bereichen der Schenkel verlaufen. Ferner können die Schenkel teilweise in nicht massiver, blockförmiger Bauform ausgeführt sein. Der erste und zweite Halter sind vorzugsweise aus einem massiven metallischen Werkstoff gefertigt, der die hohen Haltekräfte zur Halterung des schweren Speichers aufbringen kann.

In einer weiteren Ausführungsform kann der erste Halter die Durchgangsöffnungen in einem ersten Teilbereich des ersten Halters aufweisen, mit denen der erste Halter am Trägerrahmen befestigt werden kann, vorzugsweise über Schraubverbindungen. Ferner kann der erste Halter einen zweiten Teilbereich aufweisen, der im am Trägerahmen befestigten Zustand des ersten Halters vom Trägerrahmen nach unten abragt und nicht mit dem Trägerrahmen in direktem Kontakt steht und zwei Schenkel aufweist. Ferner kann der zweite Halter Durchgangsöffnungen aufweisen, die im Wesentlichen über die ganze Länge des zweiten Halters angeordnet sind und mit denen der zweite Halter an dem Speicher befestigt werden kann, vorzugsweise über Schraubverbindungen.

Alternativ oder zusätzlich können der erste Halter und der zweite Halter auch stoffschlüssig, z. B. über eine Schweißverbindung, an dem Trägerrahmen oder dem Speicher befestigt werden.

In einer weiteren Ausführungsform kann der erste Halter rippenförmige Verstärkungen aufweisen, die die Stabilität und Steifigkeit des ersten Halters erhöhen. In einer weiteren Ausführungsform kann der erste Halter in Zwischenräumen der rippenförmigen Verstärkungen Durchgangsöffnungen aufweisen. In einer weiteren Ausführungsform können der erste Halter und der zweite Halter in etwa gleich große und/oder ähnliche Umrisse aufweisen und/oder stehen sich im vorpositionierten Zustand etwa gegenüber. Ferner können die ersten und/oder die zweiten Halter Aussparungen, vorzugsweise in einem mittleren Bereich der Halter, umfassen. Dies spart Material und Gewicht und damit Kosten.

Vorzugsweise werden zur Befestigung des Speichers am Trägerrahmen zwei Haltevorrichtungen (zwei Vorrichtungen zur Halterung eines Speichers, nachfolgend als System zur Halterung bezeichnet), wie sie vorstehend beschrieben wurden, verwendet, wobei jede Haltevorrichtung jeweils einen ersten und zweiten Halter aufweist, wie sie vorstehend beschrieben wurden. Hierbei ist es besonders vorteilhaft, wenn eine der Haltevorrichtungen als Festlager und die andere als Loslager ausgeführt ist. Dies bietet den Vorteil, dass Lagetoleranzen durch eine Fest-Loslager-Kombination ausgeglichen werden können, sodass der Speicher spannungsfrei in Fahrzeuglängsrichtung in der ersten und der zweiten Vorrichtung gehaltert werden kann.

Entsprechend wird gemäß einem weiteren Aspekt der Erfindung ferner ein System und/oder eine Anordnung zur Halterung eines Speichers für Antriebsenergie an einem Trägerrahmen eines Fahrzeugs bereitgestellt, umfassend eine erste Haltevorrichtung und eine zweite Haltevorrichtung, wie sie in diesem Dokument beschrieben sind, wobei die erste Haltevorrichtung als Festlager und die zweite Haltevorrichtung als Loslager ausgeführt ist.

Alternativ ist ein System oder eine Anordnung mit mehr als zwei Vorrichtungen zur Halterung eines Speichers für Antriebsenergie möglich, von denen maximal eine Vorrichtung als Festlager und alle weiteren als Loslager ausgeführt sind. Bei einem System mit mehr als zwei Vorrichtungen ist es von Vorteil, das Festlager in der Mitte der Vorrichtungen zu platzieren, um eine Aufsummierung mehrerer Lagertoleranzen oder Dehnungen zu vermeiden.

In einer Ausführungsform kann das Loslager ausgebildet sein, in einem fixierten und/oder verspannten Zustand des ersten und des zweiten Halters eine Relativbewegung quer zur Schieberichtung zwischen erstem Halter und zweitem Halter zuzulassen. Dies bietet den Vorteil des Ausgleichs von Toleranzen und/oder Spannungen und/oder Dehnungen z. B. aufgrund von Wärmeeinfluss im Fahrzeugbetrieb.

In einer weiteren Ausführungsform kann das Festlager ausgebildet sein, in einem fixierten und/oder verspannten Zustand des ersten und des zweiten Halters keine Relativbewegung quer zur Schieberichtung zwischen erstem Halter und zweitem Halter zuzulassen.

In einer weiteren Ausführungsform können der erste Halter und der zweite Halter des Festlagers an den gegenseitigen Berührungsflächen einerseits eine Einschiebenut und andererseits mindestens ein Schiebeelement aufweisen, wobei das mindestens eine Schiebeelement des zweiten Halters in eine zusätzliche Nut des ersten Halters ragt und an äußeren Kanten in Schieberichtung plane Kontaktflächen aufweist, die an planen Kontaktflächen der zusätzlichen Nut anliegen, die den zweiten Halter zum ersten Halter quer zur Schieberichtung fest positionieren. Dies bietet den Vorteil, dass eine Selbstzentrierung des zweiten Halters zum ersten Halter erfolgt.

Die Erfindung betrifft ferner ein Fahrzeug, vorzugsweise Nutzfahrzeug, aufweisend einen Trägerrahmen, der zwei voneinander beabstandete und über mehrere Querträger miteinander verbundene Rahmen-Längsträger, vorzugsweise C-Profilträger, umfasst. Das Fahrzeug umfasst ferner einen Speicher für Antriebsenergie, vorzugsweise einen Speicher für elektrische Energie, und eine Vorrichtung und/oder ein System zur Halterung des Speichers wie in diesem Dokument offenbart, wobei der erste Halter am Rahmenlängsträger und der zweite Halter am Speicher befestigt, vorzugsweise verstiftet und/oder verschraubt und/oder vernietet, ist.

Gemäß einem zweiten allgemeinen Gesichtspunkt der Erfindung wird ein Verfahren zur Befestigung eines Speichers für Antriebsenergie, vorzugsweise eines Speichers für elektrische Energie, an einem Trägerrahmen eines Fahrzeugs, bereitgestellt, umfassend die Schritte:
- Bereitstellung einer Vorrichtung oder eines Systems wie in diesem Dokument offenbart;
- Befestigung des ersten Halters am Trägerrahmen;
- Befestigung des zweiten Halters am Speicher; und
- Befestigung des Speichers am Trägerrahmen durch Aufschieben, Einstecken und/oder Einrasten des zweiten Halters auf den ersten Halter.

Zur Vermeidung von Wiederholungen sollen rein vorrichtungsgemäß offenbarte Merkmale auch als verfahrensgemäß offenbart gelten und beanspruchbar sein. Die vorgenannten Aspekte und erfindungsgemäßen Merkmale, insbesondere im Hinblick auf die Ausbildung der Haltevorrichtung oder des Systems, gelten somit auch für das Verfahren.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Figuren beschrieben. Es zeigen:
- Figur 1: eine Seiten-, Vorder- und Draufsicht eines Fahrzeugs bezüglich einer Fahrzeughöhen-, Fahrzeugquer- und Fahrzeuglängsrichtung;
- Figur 2: ein schematisches Ablaufdiagramm zur Illustration eines Verfahrens zur Befestigung eines Speichers an einem Trägerrahmen eines Fahrzeugs gemäß einer Ausführungsform;
- Figur 3: ein System bzw. zwei Vorrichtungen zur Halterung eines Speichers für Antriebsenergie an einem Rahmen-Längsträger eines Fahrzeugs im nicht vorpositionierten Zustand gemäß einer Ausführungsform;
- Figur 4: eine Vorrichtung zur Halterung eines Speichers für Antriebsenergie an einem Rahmen-Längsträger eines Fahrzeugs im nicht vorpositionierten Zustand gemäß einer Ausführungsform;
- Figur 5: eine Detailansicht in Draufsicht und Schnittdarstellung eines ersten und eines zweiten Halters eines Festlagers im Bereich eines schwalbenschwanzförmigen Schiebeelements im vorpositionierten Zustand gemäß einer Ausführungsform;
- Figur 6: eine Draufsicht in Schnittdarstellung eines ersten und eines zweiten Halters eines Festlagers in einem von einem Rahmen-Längsträger beabstandeten Bereich des ersten Halters im vorpositionierten Zustand gemäß einer Ausführungsform;
- Figur 7: eine Detailansicht in Seitenansicht und Schnittdarstellung in einem unteren Endbereich der Vorrichtung im vorpositionierten Zustand gemäß einer Ausführungsform;
- Figur 8: eine Seitenansicht in Schnittdarstellung einer Vorrichtung in einem verspannten Zustand gemäß einer Ausführungsform.
- Figur 9: eine Detailansicht in Seitenansicht und Schnittdarstellung einer Vorrichtung in einem verspannten Zustand gemäß einer Ausführungsform;
- Figur 10: eine Detailansicht einer Vorrichtung an einem Rahmen-Längsträger eines Fahrzeugs im nicht vorpositionierten Zustand mit einer Spanneinrichtung gemäß einer Ausführungsform;
- Figur 11: eine perspektivische Ansicht zweier erster Halter befestigt an einem Rahmen-Längsträger mit Spanneinrichtungen und entnehmbaren Bolzen gemäß einer Ausführungsform;
- Figur 12: eine Vorrichtung mit eingesetztem Arretierelement im nicht vorpositionierten Zustand gemäß einer Ausführungsform;
- Figur 13: eine Explosionsdarstellung eines unteren Endbereichs eines ersten Halters gemäß einer Ausführungsform;
- Figur 14: eine Seitenansicht in Schnittdarstellung eines unteren Endbereichs einer Vorrichtung im vorpositionierten Zustand gemäß einer Ausführungsform;
- Figur 15: eine perspektivische Ansicht eines unteren Endbereichs eines ersten und eines zweiten Halters im vorpositionierten Zustand gemäß einer Ausführungsform; und
- Figur 16: eine Draufsicht in Schnittdarstellung eines ersten und eines zweiten Halters eines Festlagers im verspannten Zustand gemäß einer Ausführungsform.

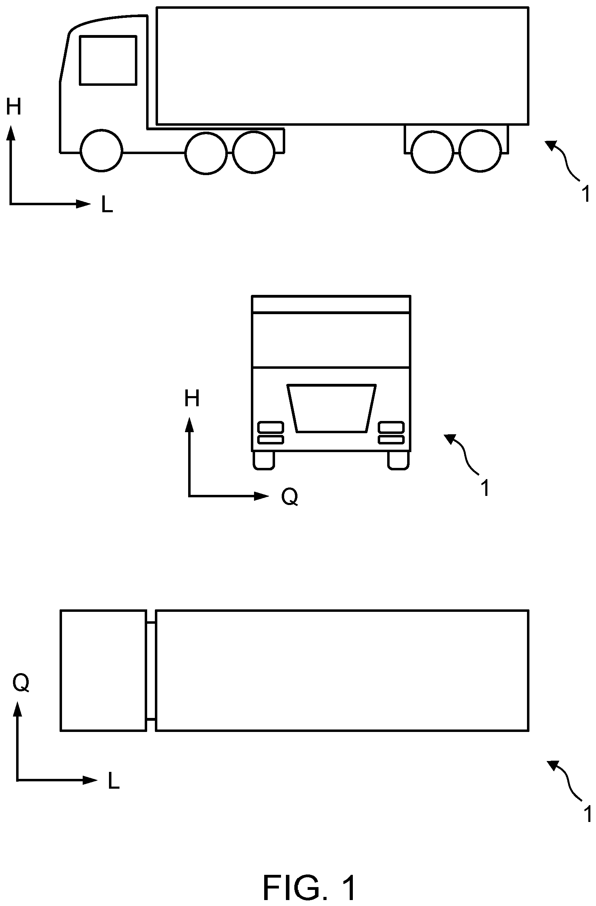

Figur 1 zeigt zunächst eine Seiten-, Vorder- und Draufsicht eines Fahrzeugs 1 bezüglich einer Fahrzeughöhen- H, Fahrzeugquer- Q und Fahrzeuglängsrichtung L. Die Figur 1 dient zur Illustration der Fahrzeughöhen- H, Fahrzeugquer- Q und Fahrzeuglängsrichtung L, auf die nachfolgend bei der Beschreibung der Haltevorrichtung Bezug genommen wird.

Die obere Darstellung der Figur 1 zeigt das Fahrzeug 1, hier ein Nutzfahrzeug, in einer Seitenansicht, wobei eine Fahrzeughöhenrichtung H vertikal und eine Fahrzeuglängsrichtung L horizontal verläuft. Die mittlere Darstellung zeigt das Fahrzeug 1 in einer Vorderansicht, wobei eine Fahrzeughöhenrichtung H vertikal und eine Fahrzeugquerrichtung Q horizontal verläuft. Die untere Darstellung zeigt das Fahrzeug 1 in einer Draufsicht, wobei eine Fahrzeugquerrichtung Q vertikal und eine Fahrzeuglängsrichtung L horizontal verläuft.

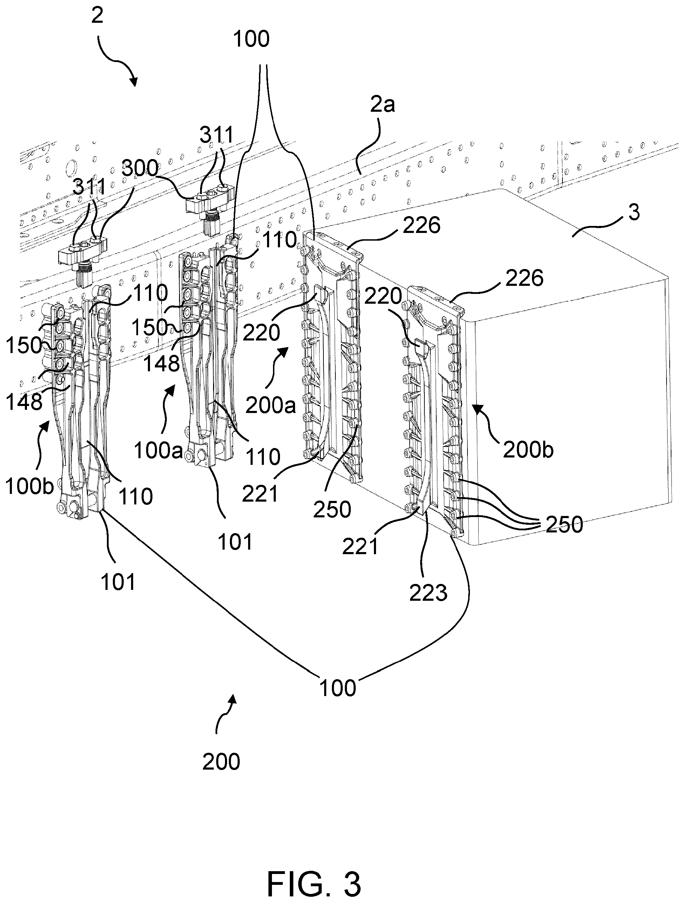

Figur 3 zeigt beispielhaft zwei Haltevorrichtungen 100 zur Halterung eines Speichers 3 für elektrische Energie an einem Rahmen-Längsträger 2a des Nutzfahrzeugs 1 im nicht vorpositionierten Zustand. Der Trägerrahmen 2 umfasst zwei voneinander beabstandete und über mehrere Querträger miteinander verbundene Rahmen-Längsträger 2a. Der Speicher 3 ist eine Hochvolt-Traktionsbatterie für ein Nutzfahrzeug 1, die am Trägerrahmen, hier insbesondere am Rahmen-Längsträger 2a des Nutzfahrzeugs 1, befestigt wird.

Jede der Haltevorrichtungen 100 umfasst jeweils einen ersten Halter 100a, 100b zur Befestigung der Vorrichtung an dem Trägerrahmen 2 bzw. dem Rahmen-Längsträger 2a und einen zweiten Halter zur Befestigung der Vorrichtung an dem Speicher 3. In Figur 3 erkennbar sind zwei erste Halter 100a, 100b, die bereits im am Rahmen-Längsträger 2a (vor)montierten Zustand gezeigt sind, und zwei zweite Halter 200a, 200b, die bereits im am Speicher 3 (vor)montierten Zustand gezeigt sind. Die zweiten Halter 200a, 200b sind am Gehäuse des Speichers 3 befestigt.

Die ersten Halter 100a, 100b sind ausgebildet, um am Rahmen-Längsträger 2a befestigt zu werden. Die zweiten Halter 200a; 200b sind ausgebildet, um an dem Speicher 3, insbesondere einem Speichergehäuse, befestigt zu werden. Hierzu weisen die ersten Halter 100a, 100b und die zweiten Halter 200a, 200b jeweils an ihren außenliegenden Seitenbereichen rasterförmig angeordnete Durchgangsöffnungen 150, 250 auf, in welchen jeweils, sich durch die korrespondierenden Durchgangsöffnungen erstreckende, Befestigungsmittel zur kraftschlüssigen und/oder formschlüssigen Fixierung des ersten Halters 100a, 100b am Trägerrahmen 2 und des zweiten Halters 200a, 200b am Speicher 3 aufnehmbar sind.

Die zwei ersten Halter 100a, 100b sind z. B. über Durchgangsöffnungen 150 in einem oberen Bereich in Fahrzeughöhenrichtung H an dem Rahmen-Längsträger 2a des Fahrzeugs 1 befestigt, z. B. über Schraubverbindungen. Die Durchgangsöffnungen 150 erstecken sich rasterförmig an äußeren oberen Randbereichen der ersten Halter 100a, 100b. Entsprechend weisen die zwei zweiten Halter 200a, 200b an außenliegenden Seitenbereichen in Vertikalrichtung (Fahrzeughöhenrichtung H) rasterförmig angeordnete Durchgangsöffnungen 250 auf, über die die zweiten Halter 200a, 200b an dem Speicher 3 befestigt werden, z. B. über Schrauben oder Stifte.

Die Vormontage der beiden Halterhälften kann somit vor der eigentlichen Bandmontage des Speichers 3 am Trägerrahmen 2 erfolgen. Durch die Vormontage kann die Befestigung der ersten Halter am Rahmen-Längsträger 2a und der zweiten Halter am Speicher 3 zu einem Zeitpunkt erfolgen, wo eine gute Zugänglichkeit für die Verschraubung besteht.

Die Halterhälften sind so konstruiert, dass sie sich, z. B. bei einer Bandmontage oder auch Fließbandmontage, schnell und einfach vertikal ineinander schieben lassen. Hierfür bilden die Halterhälften eine Schiebeführung 110, 220 aus. Bei der Bandmontage des Speichers 3 am Rahmenlängsträger 2a ist damit nur noch der Schritt notwendig, die jeweiligen Halterhälften vertikal ineinanderzuschieben, um diese dadurch in einen vorpositionierten Zustand zu bringen und anschließend zu verspannen.

Hierbei sind der erste Halter 100a und der zweite Halter 200a zur Vorpositionierung nach Art einer nut-/federartigen Schiebeführung vertikal (in Fahrzeughöhenrichtung H) ineinander schiebbar ausgebildet und formschlüssig ineinander zusammenführbar. Entsprechendes gilt analog für den ersten Halter 100b und zweiten Halter 200b, die ebenfalls zusammen eine nut-/federartige oder schwalbenschwanzartige Schiebeführung ausbilden. Hierbei bilden die ersten Halter an Berührungsflächen mit dem zweiten Halter eine Einschiebenut 110 aus, während die zweiten Halter jeweils zwei Schiebeelemente 220, 221 aufweisen, die in die Einschiebenut des zugeordneten ersten Halters eingreifen.

Hierbei weist das jeweils obere Schiebeelement 220 eine in Fahrzeugquerrichtung gerichtete Bewegung verhindernde Form auf, z. B. indem das in die Schiebenut 110 eingreifende obere Schiebeelement 110 einen T-förmigen, hammerkopfförmigen oder schwalbenschwanzförmigen Querschnitt aufweist.

Das untere Schiebeelement 221 weist jeweils eine Anschlagsfläche 223 auf. Das untere Schiebeelement ist zur Vorpositionierung des ersten und zweiten Halters zueinander von einem in der Einschiebenut 110 angeordneten Arretierelement 130, 140 mit korrespondierender Anschlagfläche 131, 141 arretierbar. Durch diese Arretierung beim vertikalen Ineinander-Zusammenführen des ersten und zweiten Halters erfolgt eine Vorpositionierung in Schieberichtung der beiden Halterhälften zueinander, wobei die Anschlagflächen 131, 141, 223 im vorpositionierten Zustand flächig aneinander anliegen und sich jeweils in einer Ebene erstrecken, die schräg zur Schieberichtung ist.

In dem vorpositionierten Zustand sind die zweiten Halterhälften 200a, 200b in den ersten Halterhälften 100a, 100b bereits so gesichert, dass diese nicht mehr nach unten aus den ersten Haltern 100a, 100b gleiten können und auch nicht mehr in Fahrzeugquerrichtung Q herauskippen können. Wie die jeweiligen Halterhälften 100a, 100b, 200a, 200b beispielhaft konstruktiv im Details ausgestaltet sind, wird im Folgenden erläutert.

Figur 3 illustriert ferner ein Halterungssystem 200 zur Halterung des Speichers 3, das aus einer ersten Haltevorrichtung 100 bestehend aus dem ersten Halter 100a und dem zweiten Halter 200a und einer zweiten Haltevorrichtung 100 bestehend aus einem ersten Halter 100b und einem zweiten Halter 200b gebildet wird. Die erste Vorrichtung 100 ist als Festlager und die zweite Vorrichtung 100 als Loslager ausgebildet, was nachfolgend noch näher erläutert wird.

Die zwei zweiten Halter 200a, 200b weisen an ihrem oberen Ende optional zwei kurze Flächen 226 auf, die an einer Oberseite des Speichers 3 anliegen. Die kurzen Flächen 226 erhöhen die Steifigkeit der zweiten Halter 200a, 200b an einem oberen Endbereich und minimieren eine Durchbiegung der zweiten Halter 200a, 200b bei Kraftbeaufschlagung. Die kurzen Flächen 226 weisen Aussparungen auf, in die Befestigungsmittel, wie zum Beispiel Schraubenköpfe, des Speichers 3 hineinragen.

Die zwei zweiten Halter 200a, 200b umfassen jeweils zwei Schiebeelemente 220, 221, die von einer dem Speicher 3 gegenüberliegen Seite der zweiten Halter 200a, 200b abragen. Das Schiebeelement 220 ist in der Dimension der Fahrzeuglängsrichtung L in montiertem Zustand der Vorrichtung 100 breiter als das Schiebeelement 221.

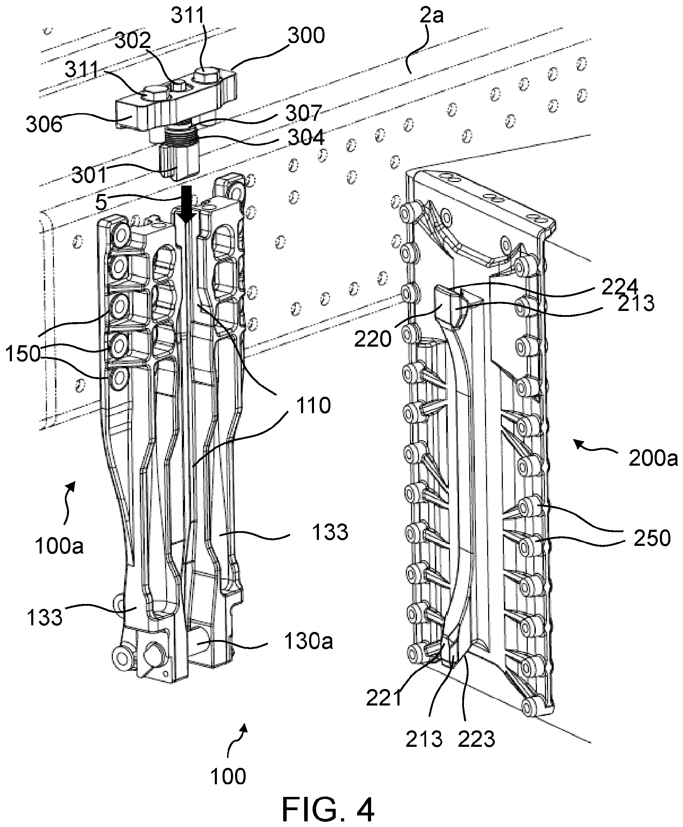

Darüber hinaus unterscheiden sich die Schiebeelemente 220, 221 des zweiten Halters 200a von denen des zweiten Halters 200b insofern, dass das Schiebeelement 220, 221 des zweiten Halters 200a an äußeren Kanten in Schieberichtung schräge Kontaktflächen 213 (siehe Fig. 4) aufweist, die eine feste Positionierung des zweiten Halters 200a zum ersten Halter 100a in Fahrzeuglängsrichtung L zulassen und damit ein Festlager bilden.

Zur Stabilisierung und Versteifung der ersten Halter 100a,100b weisen diese eine zumindest zum Teil zwischen den Durchgangsöffnungen 150 liegende rippenförmige Verstärkung 148 auf.

Ferner weisen die zwei ersten Halter 100a, 100b jeweils die vorstehend bereits genannte Einschiebenut 110 auf, in die die Schiebeelemente 220,221 der zwei zweiten Halter 200a, 200b einschiebbar sind. Ferner weisen die zwei ersten Halter 100a, 100b einen in Fahrzeughöhenrichtung H unteren Endbereich 101 auf. Auf die Funktionsweise des unteren Endbereichs 101 wird noch in der weiteren Figurenbeschreibung eingegangen werden.

Weiterhin sind zwei Spanneinrichtungen 300 dargestellt, die für eine Verspannung, Verkeilung und/oder Fixierung der Halter 100a, 100b, 200a, 200b in einem vorpositionierten Zustand sorgen. Dafür werden die Spanneinrichtungen 300 über die Befestigungsschrauben 311 mit den ersten Haltern 100a, 100b lösbar verbunden. Auf die Funktionsweise der Spanneinrichtungen 300 wird noch in der weiteren Figurenbeschreibung eingegangen werden.

Figur 4 zeigt eine Detailansicht einer Vorrichtung 100 zur Halterung eines Speichers 3 für Antriebsenergie an einem Rahmen-Längsträger 2a eines Fahrzeugs 1 im nicht vorpositionierten Zustand.

An den Schiebeelementen 220, 221 des zweiten Halters 200a sind die schrägen Kontaktflächen 213 dargestellt, die eine Bewegung des zweiten Halters 200a im ersten Halter 100a in Fahrzeuglängsrichtung L in einem verspannten Zustand verhindern.

Die dargestellte Spanneinrichtung 300 umfasst ein Druckstück 301, welches zum Aufbringen von Druck auf die Schrägkante 224 am Schiebeelement 220 dient. Ferner umfasst die Spanneinrichtung 300 eine Schraube 302, die drehbar in der Schraubenhalterung 306 gehaltert ist und durch Drehen eine Bewegung des Druckstücks 301 in Fahrzeughöhenrichtung H nach unten bewirkt. Ferner umfasst die Spanneinrichtung 300 ein über dem Druckstück 301 und mit diesem in Wirkverbindung stehendes Tellerfederpaket 304, welches bei einer Vorspannung der Spanneinrichtung 300 komprimiert wird und im Falle von Setzverhalten das darunter gehalterte Druckstück 301 vertikal in Fahrzeughöhenrichtung H nachschieben kann. Ferner umfasst die Spanneinrichtung 300 bevorzugt eine Kugelausgleichs-Scheibe 307, welche Schiefstellungen und/oder Winkelabweichungen zwischen einer vertikalen Achse der Schraube 302 und einer vertikalen Achse des Tellerfederpakets 304 und/oder Druckstücks 301 ausgleicht und damit eine stirnseitige und zum Tellerfederpaket 304 und/oder Druckstück 301 gewandten Druckfläche der Schraube 302 mit der gesamten Fläche auf das Tellerfederpaket 304 und/oder Druckstück 301 drückt.

Die Schieberichtung 5 ist mit einem Pfeil unterhalb des Druckstücks 301 dargestellt und gibt die Richtung an, in die der zweite Halter 200a in den ersten Halter 100a im gezeigten Ausführungsbeispiel eingeschoben wird.

Die Schraubenhalterung 306 wird durch die Befestigungsschrauben 311 an einem oberen Ende des ersten Halters 100a, 100b befestigt.

Der erste Halter 100a umfasst an seinem unteren Ende zwei Schenkel 133, zwischen denen die Einschiebenut 110 verläuft.

Ein erster entnehmbarer Bolzen 130a, welcher von den Schenkeln 133 gehaltert wird, bildet ein Arretierelement in Schieberichtung für das Schiebeelement 221 des zweiten Halters 200a, sodass eine Anschlagfläche 223 an einer Unterseite des Schiebeelements 221 auf dem ersten entnehmbaren Bolzen 130a aufliegt.

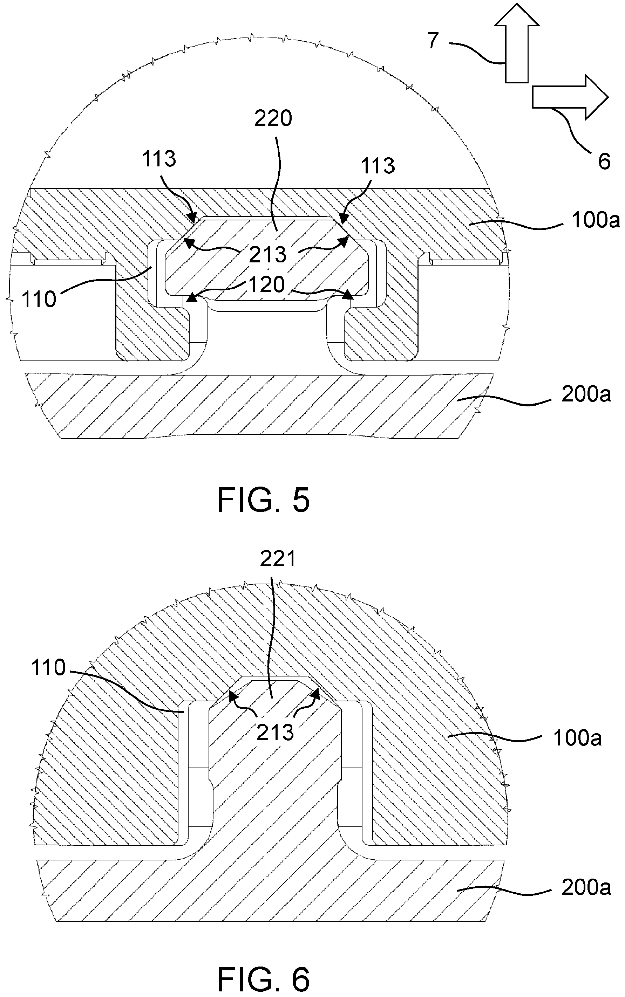

Figur 5 zeigt eine Detailansicht in Draufsicht und Schnittdarstellung eines ersten und eines zweiten Halters 100a, 200a eines Festlagers im Bereich eines schwalbenschwanzförmigen Schiebeelements 220 im vorpositionierten Zustand gemäß einer Ausführungsform.

Das Schiebeelement 220 des zweiten Halters 200a befindet sich in der Einschiebenut 110 des ersten Halters 100a. Das Schiebeelement 220 umfasst eine plane Kontaktfläche 213, die im in der Einschiebenut 110 eingesetzten Zustand des Schiebeelements 220 flächig an einer korrespondierenden Kontaktfläche 113 der Einschiebenut 110 des ersten Halters 100a anliegt, wobei sich die plane Kontaktefläche 213 in einer Ebene erstreckt, die parallel zur Schieberichtung 5 und schräg zu einer Breiten- und Tiefenrichtung 6, 7 des ersten und zweiten Halters 100a, 200a verläuft. Die dargestellten Pfeile in Figur 5 zeigen die Breitenrichtung 6 und die Tiefenrichtung 7 im Verhältnis zu dem ersten und zweiten Halter 100a, 200a. Durch die Form der planen Kontaktflächen 213 wird eine Bewegung in Fahrzeuglängsrichtung L, in Figur 5 entsprechend in horizontaler Richtung, verhindert.

Die abschnittsweise hintergreifenden Flächen 120 sorgen dafür, dass in einem vorpositionierten Zustand des ersten Halters 100a und des zweiten Halters 200a ein Herausfallen in Fahrzeugquerrichtung Q verhindert wird. Die Einschiebenut 110 umfasst hierfür abschnittsweise eine umgreifende Form, die für das Schiebeelement 220 entsprechende hintergreifende Flächen 120 bildet. Die Form der Schwalbenschwanz-Führung ist hierfür besonders geeignet. Weitere Ausführungsformen sind möglich, die die Funktion des Herausfallens verhindern, aber dennoch ein Führen in Einschieberichtung ermöglichen.

Figur 6 zeigt eine Draufsicht in Schnittdarstellung eines ersten und eines zweiten Halters 100a, 200a eines Festlagers in einem von einem Rahmen-Längsträger 2a beabstandeten Bereich des ersten Halters 100a im vorpositionierten Zustand.

Das Schiebeelement 221 liegt mit seinen schrägen Kontaktflächen 213, analog zu Figur 5, an entsprechenden Kontaktflächen des ersten Halters 100a in der Einschiebenut 110 an. Der Größenunterschied der Schiebeelemente 220 und 221 aus Figur 5 und Figur 6 ist gut zu erkennen.

Figur 5 und 6 zeigen die Ausführungsform eines Festlagers. Bei der Ausführungsform eines Loslagers umfassen die Schiebeelemente 220 und 221 keine schrägen Kontaktflächen 213, und auch die Einschiebenut 110 des ersten Halters 100b umfasst keine entsprechenden Kontaktflächen. Der zweite Halter 200b liegt somit flach am ersten Halter 100b an, wodurch kleine Ausgleichsbewegungen relativ zwischen erstem Halter 100b und zweitem Halter 200b ermöglicht werden.

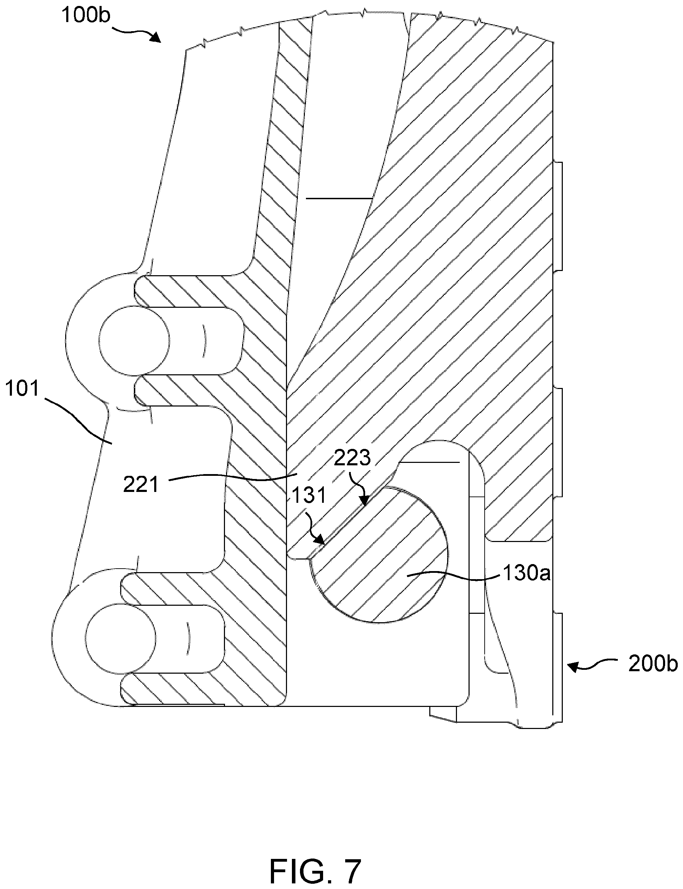

Figur 7 zeigt eine Detailansicht in Seitenansicht und Schnittdarstellung in einem unteren Endbereich der Vorrichtung 100 im vorpositionierten Zustand gemäß einer Ausführungsform.

Wie bereits vorher ausgeführt, liegt das Schiebeelement 221 des zweiten Halters 200b flach am ersten Halter 100b im vorpositionierten Zustand an, sodass eine relative Bewegung in Fahrzeugquerrichtung Q zwischen erstem Halter 100b und zweitem Halter 200b ermöglicht wird.

Der erste entnehmbare Bolzen 130a mit seiner Anschlagfläche 131 bildet das Arretierelement für das Schiebeelement 221 des zweiten Halters 200b in Einschieberichtung, sodass die Anschlagfläche 223 des Schiebeelements 221 im vorpositionierten Zustand flächig auf der Anschlagfläche 131 des ersten entnehmbaren Bolzens 130a aufliegt. Das Schiebeelement 221 ist keilförmig im Querschnitt ausgebildet, sodass bereits durch ein Einschieben des zweiten Halters 200b in den ersten Halter 100b durch die Gravitationskraft eine Zentrierung und eine Vereinigung des ersten und des zweiten Halters 100b, 200b erfolgt, ohne eine zusätzliche Verspannung oder Fixierung vorzunehmen.

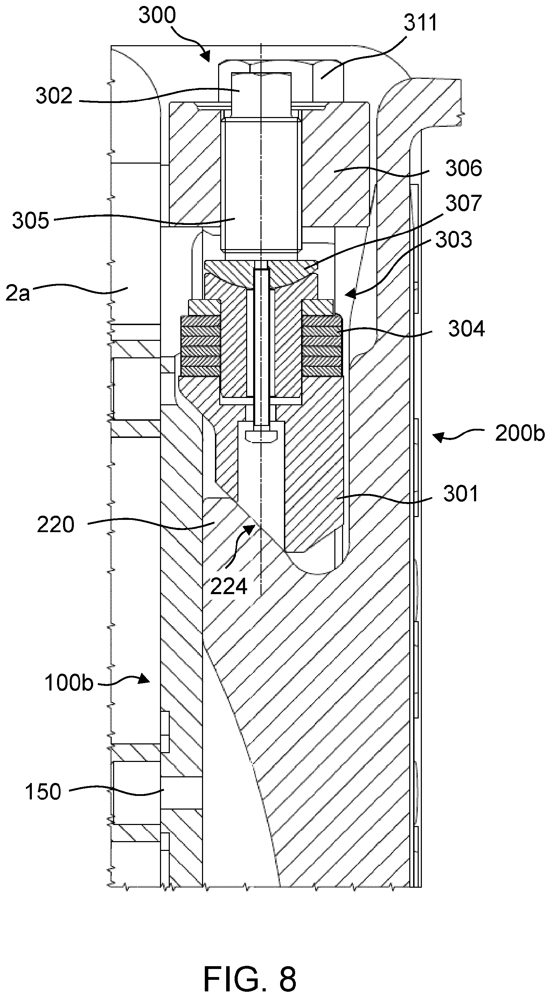

Figur 8 zeigt eine Seitenansicht in Schnittdarstellung einer Vorrichtung 100 in einem verspannten Zustand gemäß einer Ausführungsform.

Die Spanneinrichtung 300 wird mit den Befestigungsschrauben 311 über den Schraubenhalter 306 mit dem ersten Halter 100b verschraubt. Im gezeigten Ausführungsbeispiel ist in den Schraubenhalter 306 ein Innengewinde 305 eingebracht. In dem Innengewinde 305 wird die Schraube 302 gehaltert, die, wenn sie gedreht wird, eine vertikale Abwärtsbewegung der Vorspanneinrichtung 303 und des darunterliegenden Druckstücks 301 erzeugt.

Alternativ zu dem in den Schraubenhalter 306 eingebrachten Innengewinde 305 kann eine Hülse mit einem Innengewinde 305 als Pressverband in den Schraubenhalter 306 eingebracht sein, das die Schraube 302 haltert (hier nicht dargestellt).

Das Tellerfederpaket 304 der Vorspanneinrichtung 303 ist bereits komprimiert, und das darunterliegende Druckstück 301 übt Druck auf die Schrägkante 224 des Schiebeelements 220 des zweiten Halters 200b aus. Durch den Druck der Spanneinrichtung 300 wird der zweite Halter 200b fest an dem ersten Halter 100b verspannt. Durch die in Einschieberichtung schrägen Form der Schrägkante 224 bewirkt der Druck des Druckstücks 301 sowohl eine Kraft in Einschieberichtung sowie quer zu dieser, nämlich in Richtung des ersten Halters 100b. Der erste und der zweite Halter 100a, 200b werden damit sowohl vertikal als auch horizontal miteinander verspannt und fixiert.

Sollte durch Vibrationen oder sonstige Einflüsse im Fahrzeugbetrieb der Fall auftreten, dass der zweite Halter 200b weiter in vertikaler Richtung (Fahrzeughöhenrichtung H) nach unten versetzt wird, es also zu Setzverlusten kommt, wird durch die Vorspannung des Tellerfederpakets 4 dieser Versatz ausgeglichen, sodass nach wie vor eine effektive Verspannung und Fixierung des ersten und des zweiten Halters 100b,200b besteht und keine vertikalen Bewegungen durch Stöße, Vibrationen oder dergleichen zugelassen werden.

Ferner ist in Figur 8 dargestellt, wie Durchgangöffnungen 150 des ersten Halters 100b fluchtend zu entsprechenden Öffnungen des Rahmen-Längsträgers 2a angeordnet sind. Die Durchgangsöffnungen 150 zur Befestigung des ersten Halters 100b können auch an passenden Stellen verteilt über den gesamten Halter angebracht sein oder können auch zusätzlich zu den an den Randbereichen angebrachten Durchgangsöffnungen 150 in mittleren Bereichen des ersten Halters 100b angebracht sein.

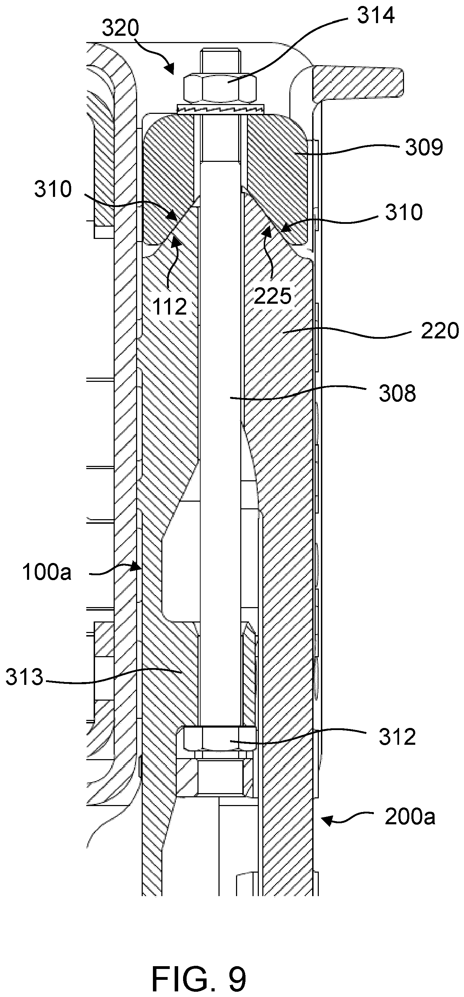

Figur 9 zeigt eine Detailansicht in Seitenansicht und Schnittdarstellung einer Vorrichtung 100 in einem verspannten Zustand gemäß einer Ausführungsform.

Die Spanneinrichtung 320 stellt eine alternative Ausführungsvariante zur bereits gezeigten Spanneinrichtung 300 dar, mit der der erste und der zweite Halter 100a, 200a miteinander verspannt werden.

Die Spanneinrichtung 320 umfasst ein Druckstück 309 mit einer im Querschnitt V-förmigen Ausnehmung, die an ihren jeweiligen Seiten schräge Druckflächen 310 umfasst. Durch das Druckstück 309 ragt eine Schraube 308, die vertikal nach unten verläuft und deren Schraubenkopf 312 über einen Vorsprung 313 am ersten Halter anliegt. Oberhalb des Druckstücks 309 ragt die Schraube 308 aus dem Druckstück 309 heraus und wird durch eine Mutter 314 gehaltert.

Die Druckflächen 310 liegen zum einen auf einer Druckfläche 112 des ersten Halters 100a und zum anderen auf einer Druckfläche 225 des Schiebeelements 220 des zweiten Halters 200a auf, die entsprechend eine Schräge relativ zur Einschieberichtung aufweisen und so gestaltet sind, dass die Druckflächen 310, 112, 225 flächig aufeinander aufliegen.

Durch ein Drehen der Mutter 314 wird die Schraube 308 mit Zug beaufschlagt, sodass das Druckstück 309 den ersten und den zweiten Halter 100a, 200a aufgrund der Geometrie der Druckflächen 310, 112, 225 miteinander verspannt, sowohl in Einschieberichtung als auch quer zur Einschieberichtung zueinander.

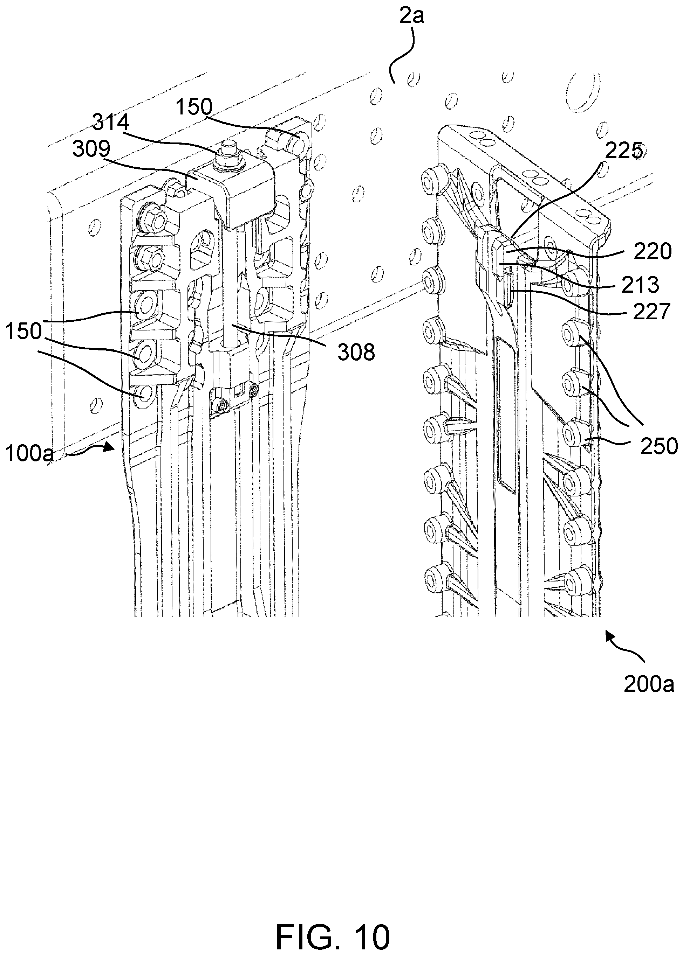

Figur 10 zeigt eine Detailansicht einer Vorrichtung 100 an einem Rahmen-Längsträger 2a eines Fahrzeugs 1 im nicht vorpositionierten Zustand mit einer Spanneinrichtung 320 gemäß einer Ausführungsform.

Die dargestellte Spanneinrichtung 320 entspricht der aus Figur 9. Die Schraube 308, das Druckstück 309 und die Mutter 314 sind am ersten Halter 100a angebracht. Das Schiebeelement 220 des zweiten Halters 200a ist in dieser Ausführungsvariante in der Mitte durch eine vertikale Öffnung geteilt, damit die Schraube 308 im vorpositionierten Zustand durch diese vertikale Öffnung verlaufen kann (siehe auch Fig. 9). Das Schiebeelement 225 umfasst an einem oberen Abschnitt des Schiebeelements 220 schräge Kontaktflächen 213, entsprechend der Ausführungsform eines Festlagers. An einem unteren Abschnitt des Schiebeelements 220 stehen seitliche Vorsprünge 227 hervor, die Anlageflächen bilden, sodass ein Herausfallen des zweiten Halters 200a aus dem ersten Halter 100a im vorpositionierten Zustand nicht mehr möglich ist.

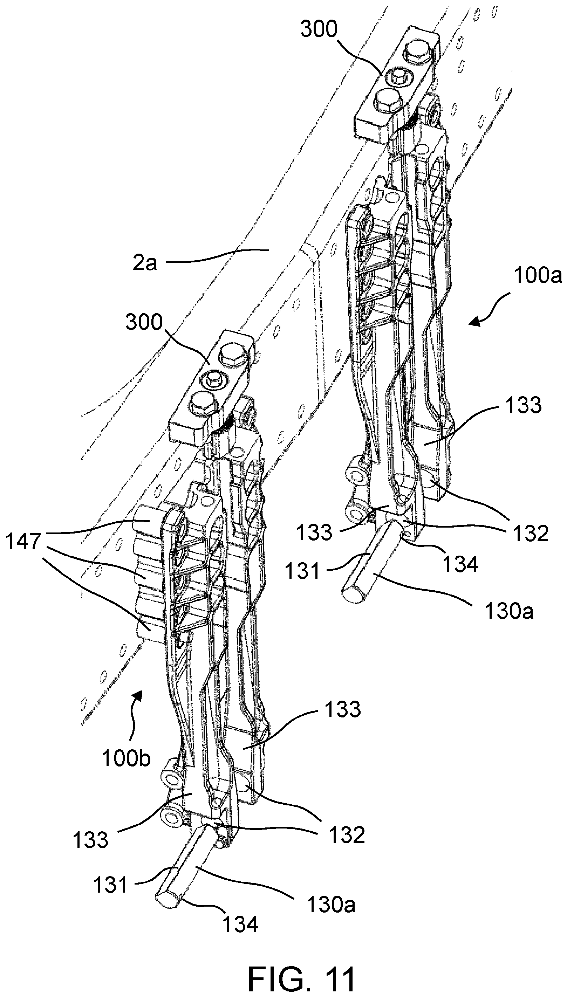

Figur 11 zeigt eine perspektivische Ansicht zweier erster Halter 100a, 100b befestigt an einem Rahmen-Längsträger 2a mit Spanneinrichtungen 300 und ersten entnehmbaren Bolzen 130a.

Die beiden ersten Halter 100a, 100b sind am Rahmen-Längsträger 2a befestigt. Der Rahmen-Längsträger 2a verläuft allerdings nicht geradlinig, sondern hat einen geknickten Verlauf. Um diesen geknickten Verlauf auszugleichen, werden in diesem Beispiel zwischen dem Rahmen-Längsträger 2a und dem ersten Halter 100b Abstandsausgleichelemente 147 in Form von Distanzhülsen gesetzt, die einen Querabstand zu einer Längsmittelebene des Fahrzeugs 1 für beide erste Vorrichtungen 100a, 100b gleich groß halten. Die Abstandsausgleichelemente 147 können als Hülsen, aber auch als flächige Bauteile ausgeführt sein, die keilförmig zwischen Rahmen-Längsträger und erstem Halter 100b verlaufen können. Die Darstellung in Figur 11 ist rein beispielhaft und soll lediglich die Funktion eines Abstandsausgleichelements 147 verdeutlichen. Denkbar sind auch Abstandsausgleichelemente 147 an mehr als einem ersten Halter 100b, abhängig von dem Verlauf eines Rahmen-Längsträgers 2a. Die ersten Halter 100a, 100b verlaufen in einer parallelen Ebene zu einer vertikalen Längsmittelebene des Fahrzeugs 1.

Ferner sind erste entnehmbare Bolzen 130a dargestellt, die eine Anschlagfläche 131 in Bolzenlängsrichtung aufweisen, die als Anschlagsfläche 131 für eine Anschlagsfläche 223 eines Schiebeelements 223 dienen. Die ersten entnehmbaren Bolzen 130a sind in Löchern 132 in den Schenkeln 133 gehaltert. Die Löcher 132 weisen ein kreisrundes Profil auf, sodass die ersten entnehmbaren Bolzen 130a in den Löchern 132 durch ihre eigene zum Teil zylindrische Form flächig anliegen. Die ersten entnehmbaren Bolzen 130a umfassen jeweils eine Nut 134 in Endbereichen, in die ein Halteblech 135 eingreift, welches an einem äußeren Seitenbereich der Schenkel 133 so lösbar befestigt wird, dass das Halteblech 135 den entnehmbaren Bolzen 130a axial sichert und eine Neigung der Anschlagfläche 131 in Bezug zur Einschieberichtung 5 vorzugsweise auf 45° einstellt. Mit anderen Worten dient das Halteblech 135 als axiale Sicherung des entnehmbaren Bolzens 130a und sorgt dafür, dass die Anschlagfläche 131 des entnehmbaren Bolzens 130a, auf der der zweite Halter 200a, 200b im vorpositionierten Zustand aufliegt, bereits in einer Neigung von ca. 45° voreingestellt wird und dadurch die richtige Lage des entnehmbaren Bolzens 130a sichergestellt ist.

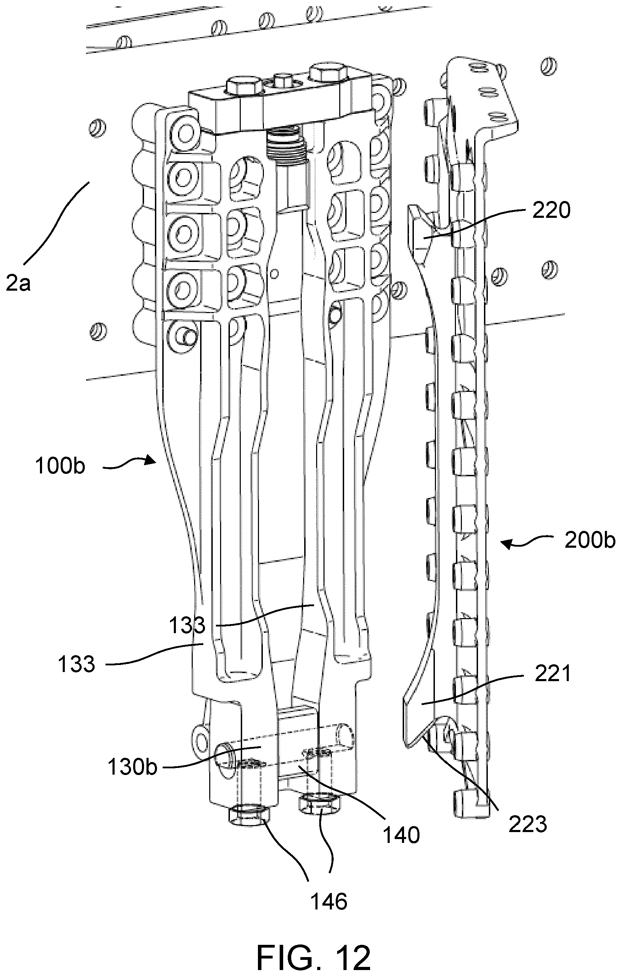

Figur 12 zeigt eine Vorrichtung 100 mit eingesetztem Arretierelement 140 im nicht vorpositionierten Zustand gemäß einer Ausführungsform.

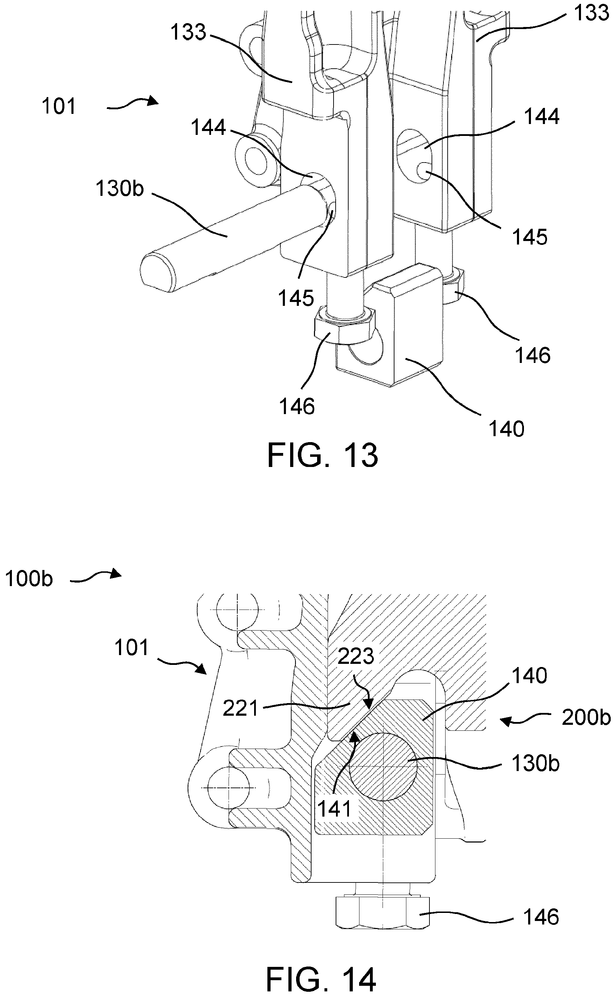

Der erste Halter 100b ist am Rahmen-Längsträger 2a befestigt und umfasst eine alternative Ausführungsform für ein Arretieren des zweiten Halters 200b im ersten Halter 100b in Schieberichtung. Am unteren Ende des ersten Halters 100b ist ein zweiter entnehmbarer Bolzen 130b dargestellt, der ein Arretierelement 140 trägt, welches zwischen den Schenkeln 133 des ersten Halters 100b sitzt und drehbar auf dem zweiten entnehmbaren Bolzen 130b gelagert ist. Für die Anschlagfläche 223 des Schiebeelements 221 des zweiten Halters 200b bildet somit das Arretierelemenet 140 das Gegenstück. Auf die Konstruktion wird in Figuren 13 und 14 weiter eingegangen.

Figur 13 zeigt eine Explosionsdarstellung eines unteren Endbereichs 101 eines ersten Halters 100a, 100b gemäß einer Ausführungsform.

Der untere Endbereich 101 umfasst zwei Schenkel 133, in denen zwei vertikale Langlöcher 144 auf gleicher Höhe eingebracht sind. Ferner sind in den zwei Schenkeln 133 vertikale Gewindebohrungen 145 eingebracht, die in die vertikalen Langlöcher 144 von unten ragen. In diese Gewindebohrungen 145 werden die Schrauben 146 eingeschraubt. Der zweite entnehmbare Bolzen 130b weist an Endbereichen in Bolzenlängsrichtung zwei gegenüberliegende flache Bereiche auf, die als Anlageflächen für die Schrauben 146 dienen. Beim Einschrauben der Schrauben 146 drücken diese den zweiten entnehmbaren Bolzen 130b an dessen flachen Bereichen in Vertikalrichtung nach oben, sodass der Bolzen zwischen dem oberen Ende der vertikalen Langlöcher 144 und den Schrauben 146 fixiert wird. Dadurch wird auch das Arretierelement 140, welches drehbar auf dem zweiten entnehmbaren Bolzen 130b gehaltert ist, in vertikaler Richtung (also entgegen der Einschieberichtung) nach oben bewegt. Durch das Nach-Oben-Schieben des zweiten Halters 200a, 200b (hier nicht dargestellt) wird das Tellerfederpaket 304 der Spanneinrichtung 300 (hier nicht dargestellt) komprimiert, sodass nach erfolgtem Einsetzen des zweiten Halters Setzverluste im Fahrzeugbetrieb erneut kompensiert werden können. Ein gleicher Mechanismus ist auch mit der Spanneinrichtung 320 möglich.

Figur 14 zeigt eine Seitenansicht in Schnittdarstellung eines unteren Endbereichs 101 einer Vorrichtung 100 im vorpositionierten Zustand gemäß einer Ausführungsform.

Die in Figur 13 beschriebene Funktionsweise ist in Figur 14 in einem montierten Zustand dargestellt. Das Arretierelement 140 umfasst eine Anschlagsfläche 141, die die Anschlagsfläche 223 des Schiebeelements 221 des zweiten Halters 200b flächig berührt. Der zweite entnehmbare Bolzen 130b trägt das Arretierelement 140 drehbar durch ein rundes Durchgangsloch im Arretierelement 140. Die Schrauben 146 sind nicht bis zum Anschlag an den der Unterseite der Schenkel 133 in die Gewindebohrungen 145 eingeschraubt, um Doppelpassungen zu vermeiden.

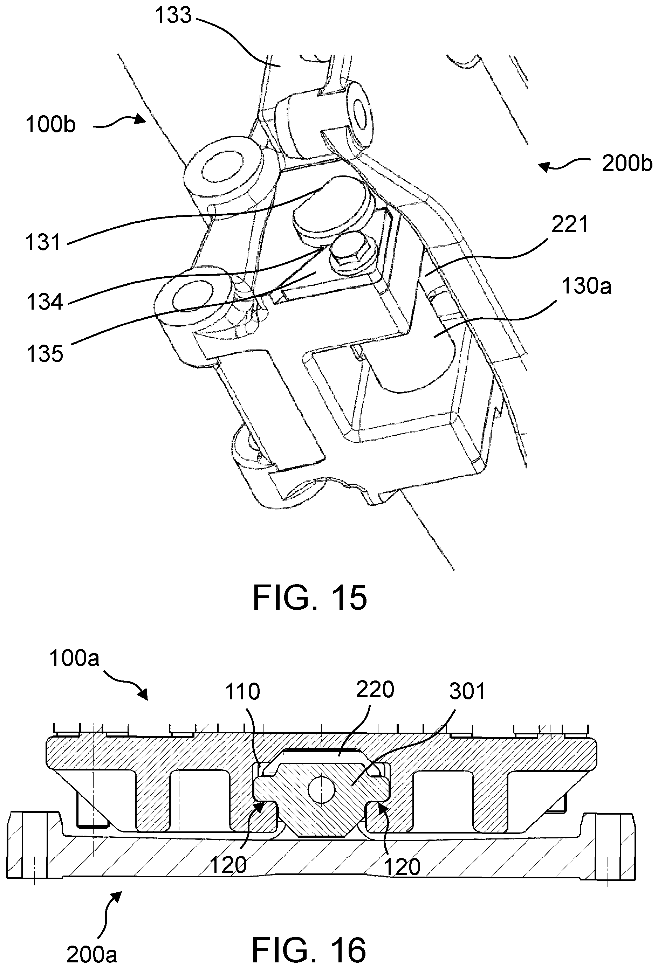

Figur 15 zeigt eine perspektivische Ansicht eines unteren Endbereichs 101 eines ersten und eines zweiten Halters 100b, 200b im vorpositionierten Zustand gemäß einer Ausführungsform.

Dargestellt ist, wie der erste entnehmbare Bolzen 130a einen Anschlag für das Schiebelement 221 des zweiten Halters 200b bildet. Der erste entnehmbare Bolzen 130a weist eine Nut 134 auf, in die ein Halteblech 135 eingreift. Das Halteblech 135 ist durch ein Befestigungsmittel lösbar an einem seitlich äußeren Bereich des Schenkels 133 befestigt und so angebracht, dass es in die Nut 134 in der Form eingreift, dass die Anschlagsfläche 131 des entnehmbaren Bolzens 130a mit einem 45° Winkel zu einer Einschieberichtung positioniert ist. Im dargestellten Beispiel ist das Halteblech 135 im Wesentlichen dreieckig ausgeformt. Ferner überragt das Halteblech 135 den Schenkel 133 in der dargestellten Ausführungsform nicht an einer seitlichen Kontur, sondern schließt mit dem Schenkel 133 bündig ab. Ferner ist das Halteblech 135 im eingebauten Zustand drehfest angeordnet, wobei im gezeigten Ausführungsbeispiel das Halteblech 135 durch eine Kante des Schenkels 133 an einer Drehung gehindert wird.

Figur 16 zeigt eine Draufsicht in Schnittdarstellung eines ersten und eines zweiten Halters 100a, 200a eines Festlagers im verspannten Zustand gemäß einer Ausführungsform.

Verdeutlicht wird in dieser Darstellung, dass das Druckstück 301 im verspannten Zustand zum einen auf das Schiebeelement 220 Druck ausübt und gleichzeitig mit links- und rechtsseitigen Flanken in der Einschiebennut 110 in Fahrzeugquerrichtung Q anliegt, um bei einem Verspannen der Halter 100a, 200a ein stabiles Führen und eine gute Kraftübertragung des Druckstücks zwischen den zwei Haltern 100a, 200a zu ermöglichen. Mit anderen Worten ist zu sehen, dass das Druckstück 301 gegen die hintergreifenden Flächen 120 der Schiebeführung des ersten Halters 100a verspannt wird.

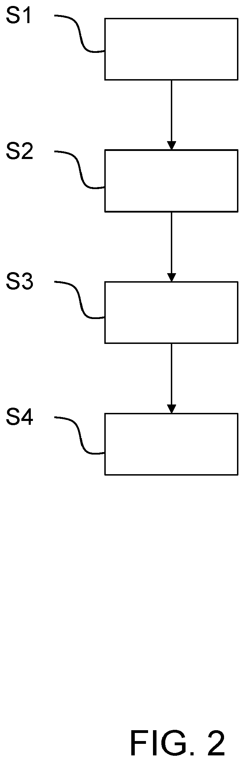

Figur 2 zeigt ein schematisches Ablaufdiagramm zur Illustration eines Verfahrens zur Befestigung eines Speichers 3 an einem Trägerrahmen 2 eines Fahrzeugs 1 gemäß einer Ausführungsform.

Schritt S1 umfasst die Bereitstellung einer Vorrichtung 100 oder eines Systems 200 gemäß der Offenbarung in diesem Dokument. Die Vorrichtung umfasst zumindest einen ersten Halter 100a, 100b und zumindest einen zweiten Halter 200a, 200b, die ineinander schiebbar und/oder einsteckbar und/oder einrastbar ausgeführt sind.

Schritt S2 umfasst die Befestigung des ersten Halters 100a, 100b am Trägerrahmen 2.

Hierbei kann die Befestigung ein Verschrauben, Verstiften, Verkleben, Verschweißen, Vernieten oder sonstige formschlüssige, kraftschlüssige oder stoffschlüssige Befestigungsformen umfassen. Notwendige Mittel für eine Befestigung, wie z. B. Durchgangsöffnungen 150, sind an den ersten Haltern 100a, 100b angebracht.

Schritt S3 umfasst die Befestigung des zweiten Halters 200a, 200b am Speicher 3. Hierbei sei auf die Befestigungsformen aus Schritt S2 verwiesen. Auch die zweiten Halter 200a, 200b umfassen Mittel für eine Befestigung, wie z. B. Durchgangsöffnungen 250, für eine Befestigung des zweiten Halters 200a, 200b am Speicher 3.

Schritt S4 umfasst die Befestigung des Speichers 3 am Trägerrahmen 2 durch Aufschieben, Einstecken und/oder Einrasten des zweiten Halters 200a, 200b auf den ersten Halter 100a, 100b. Dieser Schritt kann unter einer manuellen Führung aber auch automatisiert erfolgen. Vorstehend wurde bereits erwähnt, dass die Schritte S2 und S3 im Rahmen einer Vormontage erfolgen können, sodass während der eigentlichen Bandmontage des Speichers 3 am Rahmen-Längsträger 2a nur noch der Schritt S4 erfolgt, wobei die beiden Halterhälften vertikal ineinander zusammengeführt werden. Optional kann das Verfahren weitere Schritte umfassen, wie die Fixierung der beide Halterhälften zueinander (nach dem diese vertikal ineinander zusammengeführt wurden) über eine Spann-Einrichtung, die später im Fahrzeugbetrieb auftretende Setzverluste kompensieren kann, und damit ein unerwünschtes Spiel vermeidet.

Bestimmte Darstellungen und Ausführungsformen in den Figuren, die auf eine Ausführungsvariante als Fest- oder als Loslager bezogen wurden, sind nicht nur auf die jeweilige Ausführungsvariante beschränkt, sondern sind miteinander kombinierbar, sodass verschiedene Ausführungsformen der Spanneinrichtungen, Fest- und Loslager sowie Arretierelemente miteinander kombiniert werden können.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung (nur durch die beigefügten Ansprüche definiert) zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Fahrzeug, z. B. Nutzfahrzeug
- 2: Trägerrahmen
- 2a: Rahmen-Längsträger
- 3: Speicher
- 5: Schieberichtung
- 6: Breitenrichtung
- 7: Tiefenrichtung
- 100: Vorrichtung zur Halterung eines Speichers
- 100a: Erster Halter
- 100b: Erster Halter
- 101: Unterer Endbereich des ersten Halters
- 110: Einschiebenut
- 112: Schrägkante, Druckfläche
- 113: korrespondierende Kontaktfläche
- 120: Abschnittsweise hintergreifende Flächen
- 130: Arretierelement
- 130a: Erster entnehmbarer Bolzen
- 130b: Zweiter entnehmbarer Bolzen
- 131: Anschlagfläche
- 132: Löcher
- 133: Schenkel
- 134: Nut
- 135: Halteblech
- 140: Arretierelement
- 141: Anschlagfläche
- 144: Vertikales Langloch
- 145: Vertikale Gewindebohrung
- 146: Schraube
- 147: Abstandsausgleichelemente
- 148: Rippenförmige Verstärkung
- 150: Durchgangsöffnungen
- 200: System zur Halterung eines Speichers
- 200a: Zweiter Halter
- 200b: Zweiter Halter
- 213: plane Kontaktfläche
- 220: Schiebeelement
- 221: Schiebeelement
- 223: Anschlagsfläche
- 224: Schrägkante
- 225: Schrägkante, Druckfläche
- 226: Kurze Flächen
- 227: Seitliche Vorsprünge
- 250: Durchgangsöffnungen
- 300: Spanneinrichtung
- 301: Druckstück
- 302: Schraube
- 303: Vorspanneinrichtung
- 304: Tellerfederpaket
- 305: Hülse mit einem Innengewinde
- 306: Schraubenhalterung
- 307: Kugelausgleichs-Scheibe
- 308: Schraube
- 309: Druckstück
- 310: Schräge Druckfläche
- 311: Befestigungsschraube
- 312: Schraubenkopf
- 313: Vorsprung
- 314: Mutter
- 320: Spanneinrichtung
- H: Fahrzeughöhenrichtung
- Q: Fahrzeugquerrichtung
- L: Fahrzeuglängsrichtung

## Patentansprüche

1. Vorrichtung (100) zur Halterung eines Speichers (3) für Antriebsenergie, vorzugsweise eines Speichers (3) für elektrische Energie, an einem Trägerrahmen (2) eines Fahrzeugs (1), umfassend:
einen ersten Halter (100a; 100b) zur Befestigung der Vorrichtung an dem Trägerrahmen (2) und einen zweiten Halter (200a; 200b) zur Befestigung der Vorrichtung an dem Speicher (3), wobei zur Vorpositionierung des ersten und zweiten Halters (100a; 100b; 200a; 200b) zueinander der zweite Halter (200a; 200b) am ersten Halter (100a; 100b) aufschiebbar, einsteckbar und/oder einrastbar ausgebildet ist, wobei
der Trägerrahmen (2) zwei voneinander beabstandete und über mehrere Querträger miteinander verbundene Rahmen-Längsträger (2a), vorzugsweise C-Profilträger, umfasst, wobei der erste Halter (100a; 100b) zur Befestigung am Rahmen-Längsträger (2a) ausgebildet ist, wobei zur Vorpositionierung des ersten und zweiten Halters (100a; 100b; 200a; 200b) zueinander der zweite Halter (200a; 200b) auf dem am Rahmen-Längsträger (2a) befestigten ersten Halter (100a; 100b) in Vertikalrichtung, entsprechend der Fahrzeughöhenrichtung (H), von oben aufschiebbar, einsteckbar und/oder einrastbar ausgebildet ist,
**dadurch gekennzeichnet, dass**
die Vorrichtung (100) ferner ein an einem unteren Endbereich (101) des ersten Halters (100a; 100b) lösbar befestigtes Arretierelement (130; 140) umfasst, das einen Anschlag und/oder eine Anschlagfläche (131; 141) für den zweiten Halter (200a; 200b) bei der Vorpositionierung ausbildet, wobei das Arretierelement (130; 140) im gelösten, vorzugsweise entfernten, Zustand eine Entnahme des im ersten Halter (100a; 100b) aufgeschobenen, eingesteckten und/oder eingerasteten zweiten Halters (200a; 200b) in Vertikalrichtung nach unten ermöglicht.

2. Vorrichtung (100) nach Anspruch 1, wobei der erste Halter (100a; 100b) und der zweite Halter (200a; 200b) zur Vorpositionierung nach Art einer Schiebeführung (110, 220) ineinander schiebbar ausgebildet sind und formschlüssig ineinander zusammenführbar sind.

3. Vorrichtung (100) nach Anspruch 2, wobei die Schiebeführung (110, 220) als nut-/federartige Schiebeführung mit einander zumindest abschnittweise hintergreifenden Flächen (120) ausgebildet ist, vorzugsweise als Hammerkopf- oder Schwalbenschwanz-Führung ausgebildet ist.

4. Vorrichtung (100) nach einem der vorherigen Ansprüche, wobei der erste Halter (100a; 100b) und der zweite Halter (200a; 200b) an den gegenseitigen Berührungsflächen einerseits eine Einschiebenut (110) und andererseits mindestens ein Schiebeelement (220, 221) aufweisen.

5. Vorrichtung (100) nach einem der vorherigen Ansprüche, wobei der erste Halter (100a; 100b) eine Einschiebenut (110) und der zweite Halter (200a; 200b) mindestens ein Schiebeelement (220, 221) zum Einsetzen in die Einschiebenut (110) aufweist.

6. Vorrichtung (100) nach Anspruch 4 oder 5, wobei das mindestens eine Schiebeelement (220, 221) ein Schiebeelement (220) umfasst,
a) das eine senkrecht zur Schieberichtung, vorzugsweise in Fahrzeugquerrichtung, gerichtete Bewegung verhindernde Form aufweist und/oder einen T-förmigen, hammerkopfförmigen oder schwalbenschwanzförmigen Querschnitt aufweist; und/oder
b) das eine plane Kontaktfläche (213) aufweist, die im in der Einschiebenut (110) eingesetzten Zustand des Schiebeelements (220) flächig an einer korrespondierenden Kontaktfläche (113) der Einschiebenut (110) anliegt, wobei sich die plane Kontaktefläche (213) in einer Ebene erstreckt, die parallel zur Schieberichtung (5) und schräg zu einer Breiten- und Tiefenrichtung (6, 7) des ersten und zweiten Halters (100a; 100b; 200a; 200b) verläuft.

7. Vorrichtung (100) nach einem der Ansprüche 4 bis 6, wobei das mindestens eine Schiebeelement (220, 221) ein Schiebeelement (221) mit einer Anschlagsfläche (223) umfasst, das zur Vorpositionierung des ersten und zweiten Halters (100a; 100b; 200a; 200b) zueinander von dem in der Einschiebenut (110) angeordneten Arretierelement (130; 140) mit korrespondierender Anschlagfläche (131; 141) arretierbar ist zur Vorpositionierung in Schieberichtung, wobei die Anschlagflächen (131; 141; 223) im vorpositionierten Zustand flächig aneinander anliegen und sich jeweils in einer Ebene erstrecken, die schräg zur Schieberichtung ist.

8. Vorrichtung (100) nach einem der vorhergehenden Ansprüche, ferner umfassend eine Spanneinrichtung (300; 320) zur Fixierung, zur Verspannung und/oder zur Kompensation von Setzverlusten des ersten und zweiten Halters (100a; 100b; 200a; 200b) im zueinander vorpositionierten Zustand.

9. Vorrichtung nach Anspruch 8, wobei die Spanneinrichtung (300; 320) ausgebildet ist, den zweiten Halter (200a; 200b) in einer Einschiebenut (110), vorzugsweise einer T-Nut oder Schwalbenschwanz-Nut, des ersten Halters (100a; 100b) zu verspannen.

10. Vorrichtung (100) nach Anspruch 8 oder 9, wobei die Spanneinrichtung (300) eine Vorspanneinrichtung (303) umfasst, die vorzugsweise als Tellerfeder oder als Tellerfederpaket (304) ausgeführt ist, zur Aufrechterhaltung der Verspannung und/oder Verkeilung des ersten und zweiten Halters (100a; 100b; 200a; 200b), beispielsweise bei Auftreten von Setzverhalten im Fahrzeugbetrieb.

11. Vorrichtung (100) nach einem der Ansprüche 8 bis 10, wobei die Spanneinrichtung (300; 320) ein Druckstück (301; 309) und eine das Druckstück (301; 309) beaufschlagende Schraube (302; 308) umfasst, wobei vorzugsweise das Druckstück (301; 309) im verspannten Zustand gegen mindestens eine Schrägkante (224; 112, 225) des ersten und/oder zweiten Halters (100a; 100b; 200a; 200b) drückt, um den ersten und zweiten Halter (100a; 100b; 200a; 200b) gegeneinander zu verkeilen und/oder zu verspannen.

12. Vorrichtung (100) nach Anspruch 11, wobei
a) die das Druckstück (301) beaufschlagende Schraube (302) in einer ein Innengewinde oder eine Hülse mit einem Innengewinde (305) umfassenden Schraubenhalterung (306) gehaltert ist, welche an dem ersten Halter (100a; 100b) lösbar befestigt ist, wobei das Druckstück (301) auf den zweiten Halter (200a; 200b) im durch die Schraube (302) beaufschlagten Zustand eine Druckkraft auf eine in Bezug zur Schieberichtung schräge Druckfläche (224) des zweiten Halters (200a; 200b) Druck ausübt, sodass eine Kraft in Schieberichtung und quer zur Schieberichtung zum Verkeilen und/oder Verspannen des ersten und des zweiten Halters (100a; 100b; 200a; 200b) eingebracht wird; oder
b) das Druckstück (309) eine im Querschnitt V-förmige Ausnehmung mit zwei gegenüberliegenden schrägen Druckflächen (310) aufweist und die das Druckstück (309) beaufschlagende Schraube (308) eine Dehnschraube ist, welche sich in Schieberichtung erstreckt, wobei das Druckstück (309) in Schieberichtung durch die V-förmige Ausnehmung über die zwei schrägen Druckflächen (310) flächig Druck auf korrespondierende Druckflächen (112, 225) des ersten und des zweiten Halters (100a; 100b; 200a; 200b) zum Verkeilen und/oder Verspannen des ersten und des zweiten Halters (100a; 100b; 200a; 200b) ausübt.

13. Vorrichtung (100) nach den Anspruch 7, wobei das lösbar befestigte Arretierelement (130; 140) einen entnehmbaren Bolzen (130a, 130b) umfasst, der das in der Einschiebenut (110) angeordnete Arretierelement (130; 140) ausbildet oder trägt.

14. Vorrichtung (100) nach Anspruch 13, wobei der entnehmbare Bolzen (130a) das in der Einschiebenut (110) angeordnete Arretierelement (130) ausbildet, dessen korrespondierende Anschlagfläche (131) durch eine sich in Bolzenlängsrichtung erstreckende Fläche gebildet wird.

15. Vorrichtung (100) nach Anspruch 13, wobei der entnehmbare Bolzen (130b) das in der Einschiebenut angeordnete Arretierelement (140) trägt, das als ein entnehmbares Auflagestück durch den entnehmbaren Bolzen (130b) drehbar gehaltert ist.

16. Vorrichtung (100) nach einem der vorhergehenden Ansprüche, wobei der erste Halter (100a; 100b) und der zweite Halter (200a; 200b) jeweils an ihren außenliegenden Seitenbereichen rasterförmig angeordnete Durchgangsöffnungen (150; 250) aufweisen, in welchen jeweils, sich durch die korrespondierenden Durchgangsöffnungen erstreckende, Befestigungsmittel zur kraftschlüssigen und/oder formschlüssigen Fixierung des ersten Halters (100a; 100b) am Trägerrahmen (2) und des zweiten Halters (200a; 200b) am Speicher (3) aufnehmbar sind.

17. System (200) zur Halterung eines Speichers (3) für Antriebsenergie, vorzugsweise eines Speichers für elektrische Energie, an einem Trägerrahmen (2) eines Fahrzeugs (1), umfassend eine erste Vorrichtung (100) und eine zweite Vorrichtung (100), die jeweils gemäß einem der vorhergehenden Ansprüche ausgebildet sind, wobei die erste Vorrichtung (100) als Festlager (100a, 200a) und die zweite Vorrichtung (100) als Loslager (100b, 200b) ausgeführt ist.

18. System nach Anspruch 17, wobei
a) das Loslager (100b, 200b) in einem fixierten und/oder verspannten Zustand des ersten und des zweiten Halters (100b, 200b) eine Relativbewegung quer zur Schieberichtung zwischen erstem Halter (100b) und zweitem Halter (200b) zulässt; und
b) das Festlager (100a, 200a) in einem fixierten und/oder verspannten Zustand des ersten und des zweiten Halters (100a, 200a) keine Relativbewegung quer zur Schieberichtung zwischen erstem Halter (100a) und zweitem Halter (200a) zulässt.

19. Fahrzeug, vorzugsweise Nutzfahrzeug, aufweisend
a) einen Trägerrahmen (2), der zwei voneinander beabstandete und über mehrere Querträger miteinander verbundene Rahmen-Längsträger (2a), vorzugsweise C-Profilträger, umfasst;
b) einen Speicher (3) für Antriebsenergie, vorzugsweise einen Speicher für elektrische Energie; und
c) eine Vorrichtung gemäß einem der Ansprüche 1 bis 16 oder ein System gemäß einem der Ansprüche 17 oder 18;
wobei der erste Halter (100a; 100b) am Rahmenlängsträger (2a) und der zweite Halter (200a; 200b) am Speicher befestigt, vorzugsweise verstiftet und/oder verschraubt und/oder vernietet, ist.

20. Verfahren zur Befestigung eines Speichers (3) für Antriebsenergie, vorzugsweise eines Speichers (3) für elektrische Energie, an einem Trägerrahmen (2) eines Fahrzeugs (1), umfassend die Schritte:
Bereitstellung (S1) einer Vorrichtung gemäß einem der Ansprüche 1 bis 16 oder eines Systems gemäß einem der Ansprüche 17 oder 18;
Befestigung (S2) des ersten Halters (100a; 100b) am Trägerrahmen (2);
Befestigung (S3) des zweiten Halters (200a; 200b) am Speicher (3); und
Befestigung (S4) des Speichers (3) am Trägerrahmen (2) durch Aufschieben, Einstecken und/oder Einrasten des zweiten Halters (200a; 200b) auf den ersten Halter (100a; 100b).

## Claims

1. Device (100) for holding a storage (3) for drive energy, preferably a storage (3) for electrical energy, on a support frame (2) of a vehicle (1), comprising:
a first holder (100a; 100b) for fastening the device to the support frame (2) and a second holder (200a; 200b) for fastening the device to the storage (3),
wherein, for pre-positioning the first and second holders (100a; 100b; 200a; 200b) relative to one another, the second holder (200a; 200b) is configured to be slidable onto, insertable into and/or latchable onto the first holder (100a; 100b), wherein
the support frame (2) comprises two frame longitudinal members (2a) spaced apart from one another and connected to one another by a plurality of cross members, preferably C-profile members, wherein the first holder (100a; 100b) is configured for fastening to the frame longitudinal member (2a),
wherein, for pre-positioning the first and second holders (100a; 100b; 200a; 200b) relative to one another, the second holder (200a; 200b) is configured to be slidable onto, insertable into and/or latchable onto the first holder (100a; 100b), which is fastened to the frame longitudinal member (2a), in a vertical direction corresponding to the vehicle height direction (H), from above,
**characterized in that**
the device (100) further comprises a locking element (130; 140) detachably fastened to a lower end region (101) of the first holder (100a; 100b), which forms a stop and/or a stop surface (131; 141) for the second holder (200a; 200b) during pre-positioning, wherein the locking element (130; 140), in the released, preferably removed, state, allows removal of the second holder (200a; 200b), which has been slid on, inserted and/or latched in the first holder (100a; 100b), in the vertical direction downward.

2. Device (100) according to claim 1, wherein the first holder (100a; 100b) and the second holder (200a; 200b) are configured to be slidable into one another for pre-positioning in the manner of a sliding guide (110, 220) and are configured to be form-fittingly connectable to one another.

3. Device (100) according to claim 2, wherein the sliding guide (110, 220) is configured as a groove-and-tongue-type sliding guide with surfaces that mutually at least partially engage behind one another (120), preferably configured as a hammerhead guide or dovetail guide.

4. Device (100) according to one of the preceding claims, wherein the first holder (100a; 100b) and the second holder (200a; 200b) have, at their mutually contacting surfaces, on the one hand an insertion groove (110) and on the other hand at least one sliding element (220, 221).

5. Device (100) according to one of the preceding claims, wherein the first holder (100a; 100b) has an insertion groove (110) and the second holder (200a; 200b) has at least one sliding element (220, 221) for insertion into the insertion groove (110).

6. Device (100) according to claim 4 or 5, wherein the at least one sliding element (220, 221) comprises a sliding element (220)
a) which has a shape preventing movement directed perpendicular to the sliding direction, preferably in the vehicle transverse direction, and/or has a T-shaped, hammerhead-shaped or dovetail-shaped cross-section; and/or
b) which has a planar contact surface (213) which, in the state of the sliding element (220) inserted into the insertion groove (110), lies flat against a corresponding contact surface (113) of the insertion groove (110), wherein the planar contact surface (213) extends in a plane which is parallel to the sliding direction (5) and inclined with respect to a width direction and a depth direction (6, 7) of the first and second holders (100a; 100b; 200a; 200b).

7. Device (100) according to one of claims 4 to 6, wherein the at least one sliding element (220, 221) comprises a sliding element (221) having a stop surface (223), which, for pre-positioning the first and second holders (100a; 100b; 200a; 200b) relative to one another, is configured to be lockable by the locking element (130; 140) arranged in the insertion groove (110) with a corresponding stop surface (131; 141) for pre-positioning in the sliding direction, wherein the stop surfaces (131; 141; 223), in the pre-positioned state, lie flat against one another and each extend in a plane which is inclined with respect to the sliding direction.

8. Device (100) according to one of the preceding claims, further comprising a clamping device (300; 320) configured for fixing, clamping and/or compensating for settling losses of the first and second holders (100a; 100b; 200a; 200b) in the mutually pre-positioned state.

9. Device according to claim 8, wherein the clamping device (300; 320) is configured to clamp the second holder (200a; 200b) in an insertion groove (110), preferably a T-slot or dovetail slot, of the first holder (100a; 100b).

10. Device (100) according to claim 8 or 9, wherein the clamping device (300) comprises a preload device (303), which is preferably configured as a disc spring or as a disc spring pack (304), for maintaining the clamping and/or wedging of the first and second holders (100a; 100b; 200a; 200b), for example in the event of settling behavior during vehicle operation.

11. Device (100) according to one of claims 8 to 10, wherein the clamping device (300; 320) comprises a pressure piece (301; 309) and a screw (302; 308) acting on the pressure piece (301; 309), wherein preferably the pressure piece (301; 309), in the clamped state, presses against at least one inclined edge (224; 112, 225) of the first and/or second holder (100a; 100b; 200a; 200b) in order to wedge and/or clamp the first and second holders (100a; 100b; 200a; 200b) against one another.

12. Device (100) according to claim 11, wherein
a) the screw (302) acting on the pressure piece (301) is held in a screw holder (306) comprising an internal thread or a sleeve with an internal thread (305), which is detachably fastened to the first holder (100a; 100b), wherein the pressure piece (301), in the state acted upon by the screw (302), exerts a pressure force on the second holder (200a; 200b) via a pressure surface (224) of the second holder (200a; 200b), said pressure surface being inclined with respect to the sliding direction, so that a force is introduced in the sliding direction and transverse to the sliding direction for wedging and/or clamping the first and second holders (100a; 100b; 200a; 200b); or
b) the pressure piece (309) has a V-shaped recess in cross-section with two opposing inclined pressure surfaces (310), and the screw (308) acting on the pressure piece (309) is an expansion screw which extends in the sliding direction, wherein the pressure piece (309), in the sliding direction, by means of the V-shaped recess, via the two inclined pressure surfaces (310), exerts planar pressure on corresponding pressure surfaces (112, 225) of the first and second holders (100a; 100b; 200a; 200b) for wedging and/or clamping the first and second holders (100a; 100b; 200a; 200b).

13. Device (100) according to claim 7, wherein the detachably fastened locking element (130; 140) comprises a removable pin (130a, 130b) which forms or carries the locking element (130; 140) arranged in the insertion groove (110).

14. Device (100) according to claim 13, wherein the removable pin (130a) forms the locking element (130) arranged in the insertion groove (110), the corresponding stop surface (131) of which is formed by a surface extending in the longitudinal direction of the pin.

15. Device (100) according to claim 13, wherein the removable pin (130b) carries the locking element (140) arranged in the insertion groove, which is configured as a removable support piece and is rotatably held by the removable pin (130b).

16. Device (100) according to one of the preceding claims, wherein the first holder (100a; 100b) and the second holder (200a; 200b) each have, at their outwardly located side regions, passage openings (150; 250) arranged in a grid-like manner, in each of which fastening means, extending through the corresponding passage openings, are receivable for force-fitting and/or form-fitting fixing of the first holder (100a; 100b) to the support frame (2) and of the second holder (200a; 200b) to the storage (3).

17. System (200) for holding a storage (3) for drive energy, preferably a storage for electrical energy, on a support frame (2) of a vehicle (1), comprising a first device (100) and a second device (100), which are each configured according to one of the preceding claims, wherein the first device (100) is configured as a fixed bearing (100a, 200a) and the second device (100) is configured as a floating bearing (100b, 200b).

18. System according to claim 17, wherein
a) the floating bearing (100b, 200b), in a fixed and/or clamped state of the first and second holders (100b, 200b), allows a relative movement transverse to the sliding direction between the first holder (100b) and the second holder (200b); and
b) the fixed bearing (100a, 200a), in a fixed and/or clamped state of the first and second holders (100a, 200a), does not allow a relative movement transverse to the sliding direction between the first holder (100a) and the second holder (200a).

19. Vehicle, preferably commercial vehicle, comprising
a) a support frame (2), which comprises two frame longitudinal members (2a) spaced apart from one another and connected to one another via a plurality of cross members, preferably C-profile members;
b) a storage (3) for drive energy, preferably a storage for electrical energy; and
c) a device according to one of claims 1 to 16 or a system according to one of the claims 17 or 18;
wherein the first holder (100a; 100b) is fastened to the frame longitudinal member (2a) and the second holder (200a; 200b) is fastened to the storage, preferably pinned and/or screwed and/or riveted.

20. Method for fastening a storage (3) for drive energy, preferably a storage (3) for electrical energy, to a support frame (2) of a vehicle (1), comprising the steps:
providing (S1) a device according to one of claims 1 to 16 or a system according to one of the claims 17 or 18;
fastening (S2) the first holder (100a; 100b) to the support frame (2);
fastening (S3) the second holder (200a; 200b) to the storage (3); and
fastening (S4) the storage (3) to the support frame (2) by sliding, inserting and/or latching the second holder (200a; 200b) onto the first holder (100a; 100b).

## Revendications

1. Dispositif (100) pour supporter un réservoir (3) d'énergie d'entraînement, de préférence un réservoir (3) d'énergie électrique, sur un cadre porteur (2) d'un véhicule (1), comprenant :
un premier support (100a ; 100b) pour fixer le dispositif au cadre porteur (2) et un deuxième support (200a ; 200b) pour fixer le dispositif au réservoir (3), le deuxième support (200a ; 200b) pouvant être enfilé, enfiché et/ou encliqueté sur le premier support (100a ; 100b) pour le prépositionnement des premier et deuxième supports (100a ; 100b ; 200a ; 200b) l'un par rapport à l'autre,
le cadre porteur (2) comprenant deux longerons de cadre (2a), de préférence des soutiens profilés en C, espacés l'un de l'autre et reliés entre eux par l'intermédiaire de plusieurs traverses, le premier support (100a ; 100b) étant réalisé pour être fixé au longeron de cadre (2a),
pour le prépositionnement des premier et deuxième supports (100a ; 100b ; 200a ; 200b) l'un par rapport à l'autre, le deuxième support (200a ; 200b) étant réalisé pour pouvoir être enfilé, enfiché et/ou encliqueté par le haut sur le premier support (100a ; 100b) fixé au longeron de cadre (2a), dans la direction verticale, correspondant à la direction de hauteur (H) du véhicule,
**caractérisé en ce que**
le dispositif (100) comprend en outre un élément de blocage (130 ; 140) fixé de manière amovible à une zone d'extrémité inférieure (101) du premier support (100a ;
100b), qui réalise une butée et/ou une surface de butée (131 ; 141) pour le deuxième support (200a ; 200b) lors du prépositionnement, l'élément de blocage (130 ; 140) permettant, à l'état détaché, de préférence enlevé, un retrait du deuxième support (200a ; 200b) enfilé, enfiché et/ou encliqueté dans le premier support (100a ; 100b) dans la direction verticale vers le bas.

2. Dispositif (100) selon la revendication 1, dans lequel le premier support (100a ; 100b) et le deuxième support (200a ; 200b) sont réalisés pour pouvoir coulisser l'un dans l'autre à la manière d'un guide coulissant (110, 220) pour le prépositionnement et peuvent être assemblés l'un dans l'autre par complémentarité de forme.

3. Dispositif (100) selon la revendication 2, dans lequel le guide coulissant (110, 220) est réalisé sous forme de guide coulissant de type à rainure et languette avec des surfaces (120) s'emboîtant les unes dans les autres au moins par sections, de préférence sous forme de guide à tête de marteau ou à queue d'aronde.

4. Dispositif (100) selon l'une quelconque des revendications précédentes, dans lequel le premier support (100a ; 100b) et le deuxième support (200a ; 200b) présentent, au niveau des surfaces de contact mutuelles, d'une part une rainure d'insertion (110) et, d'autre part, au moins un élément coulissant (220, 221).

5. Dispositif (100) selon l'une quelconque des revendications précédentes, dans lequel le premier support (100a ; 100b) présente une rainure d'insertion (110) et le deuxième support (200a ; 200b) présente au moins un élément coulissant (220, 221) destiné à être introduit dans la rainure d'insertion (110).

6. Dispositif (100) selon la revendication 4 ou 5, dans lequel l'au moins un élément coulissant (220, 221) comprend un élément coulissant (220)
a) qui présente une forme empêchant un mouvement orienté perpendiculairement à la direction de coulissement, de préférence dans la direction transversale du véhicule, et/ou présente une section transversale en forme de T, en forme de tête de marteau ou en forme de queue d'aronde ; et/ou
b) qui présente une surface de contact plane (213) qui, à l'état de l'élément coulissant (220) introduit dans la rainure d'insertion (110), s'applique à plat contre une surface de contact correspondante (113) de la rainure d'insertion (110), la surface de contact plane (213) s'étendant dans un plan parallèle à la direction de coulissement (5) et oblique par rapport à une direction de largeur et de profondeur (6, 7) des premier et deuxième supports (100a ; 100b ; 200a ; 200b).

7. Dispositif (100) selon l'une quelconque des revendications 4 à 6, dans lequel l'au moins un élément coulissant (220, 221) comprend un élément coulissant (221) avec une surface de butée (223), qui pour le prépositionnement des premier et deuxième supports (100a ; 100b ; 200a ; 200b) l'un par rapport à l'autre peut être bloquée par l'élément de blocage (130 ; 140) agencé dans la rainure d'insertion (110) avec une surface de butée correspondante (131; 141) pour le prépositionnement dans la direction de coulissement, les surfaces de butée (131 ; 141 ; 223) s'appliquant à plat l'une contre l'autre à l'état prépositionné et s'étendent chacune dans un plan qui est oblique par rapport à la direction de coulissement.

8. Dispositif (100) selon l'une quelconque des revendications précédentes, comprenant en outre un appareil de serrage (300 ; 320) pour la fixation, le serrage et/ou la compensation de pertes de tassement des premier et deuxième supports (100a ; 100b ; 200a ; 200b) dans l'état prépositionné l'un par rapport à l'autre.

9. Dispositif selon la revendication 8, dans lequel le dispositif de serrage (300 ; 320) est réalisé pour serrer le deuxième support (200a ; 200b) dans une rainure d'insertion (110), de préférence une rainure en T ou une rainure en queue d'aronde, du premier support (100a ; 100b).

10. Dispositif (100) selon la revendication 8 ou 9, dans lequel le dispositif de serrage (300) comprend un appareil de précontrainte (303), qui est de préférence conçu sous forme de ressort à disque ou de paquet de ressorts à disque (304), pour maintenir le serrage et/ou le calage des premier et deuxième supports (100a ; 100b ; 200a ; 200b), par exemple en cas de comportement de tassement lors du fonctionnement du véhicule.

11. Dispositif (100) selon l'une quelconque des revendications 8 à 10, dans lequel le dispositif de serrage (300 ; 320) comprend une pièce de pression (301 ; 309) et une vis (302 ; 308) sollicitant la pièce de pression (301 ; 309), la pièce de pression (301 ; 309) appuyant de préférence, à l'état serré, contre au moins un bord oblique (224 ; 112, 225) du premier et/ou du deuxième support (100a ; 100b ; 200a ; 200b) afin de caler et/ou de serrer le premier et le deuxième support (100a ; 100b ; 200a ; 200b) l'un contre l'autre.

12. Dispositif (100) selon la revendication 11, dans lequel
a) la vis (302) sollicitant la pièce de pression (301) est maintenue dans un support de vis (306) comprenant un filetage intérieur ou une douille avec un filetage intérieur (305), lequel est fixé de manière amovible au premier support (100a ; 100b), la pièce de pression (301) exerçant sur le deuxième support (200a ; 200b), à l'état sollicité par la vis (302), une force de pression sur une surface de pression (224) du deuxième support (200a ; 200b) oblique par rapport à la direction de coulissement, de manière à introduire une force dans la direction de coulissement et transversalement à la direction de coulissement pour caler et/ou serrer les premier et deuxième supports (100a ; 100b ; 200a ; 200b) ; ou
b) la pièce de pression (309) présente un évidement en forme de V en coupe transversale avec deux surfaces de pression obliques opposées (310) et la vis (308) sollicitant la pièce de pression (309) est une vis d'expansion qui s'étend dans la direction de coulissement, la pièce de pression (309) exerçant dans la direction de coulissement à travers l'évidement en forme de V par l'intermédiaire des deux surfaces de pression obliques (310) une pression en surface sur les surfaces de pression correspondantes (112, 225) des premier et deuxième supports (100a ; 100b ; 200a ; 200b) pour caler et/ou serrer les premier et deuxième supports (100a ; 100b ; 200a ; 200b).

13. Dispositif (100) selon la revendication 7, dans lequel l'élément de blocage (130 ; 140) fixé de manière amovible comprend un boulon amovible (130a, 130b) qui réalise ou supporte l'élément de blocage (130 ; 140) agencé dans la rainure d'insertion (110).

14. Dispositif (100) selon la revendication 13, dans lequel le boulon amovible (130a) réalise l'élément de blocage (130) agencé dans la rainure d'insertion (110), dont la surface de butée correspondante (131) est formée par une surface s'étendant dans la direction longitudinale du boulon.

15. Dispositif (100) selon la revendication 13, dans lequel le boulon amovible (130b) supporte l'élément de blocage (140) agencé dans la rainure d'insertion, qui est supporté de manière rotative par le boulon amovible (130b) sous la forme d'une pièce d'appui amovible.

16. Dispositif (100) selon l'une quelconque des revendications précédentes, dans lequel le premier support (100a ; 100b) et le deuxième support (200a ; 200b) présentent chacun, au niveau de leurs zones latérales extérieures, des ouvertures de passage (150 ; 250) agencées en forme de grille, dans lesquelles peuvent être reçus respectivement des moyens de fixation s'étendant à travers les ouvertures de passage correspondantes pour la fixation par adhérence et/ou par complémentarité de forme du premier support (100a ; 100b) sur le cadre porteur (2) et du deuxième support (200a ; 200b) sur le réservoir (3).

17. Système (200) pour supporter un réservoir (3) d'énergie d'entraînement, de préférence un réservoir d'énergie électrique, sur un cadre porteur (2) d'un véhicule (1), comprenant un premier dispositif (100) et un deuxième dispositif (100), qui sont chacun réalisés selon l'une quelconque des revendications précédentes, le premier dispositif (100) étant conçu sous forme de palier fixe (100a, 200a) et le deuxième dispositif (100) sous forme de palier libre (100b, 200b).

18. Système selon la revendication 17, dans lequel
a) le palier libre (100b, 200b) permet, dans un état fixé et/ou serré du premier et du deuxième support (100b, 200b), un mouvement relatif transversalement à la direction de coulissement entre le premier support (100b) et le deuxième support (200b) ; et
b) le palier fixe (100a, 200a) ne permet, dans un état fixé et/ou serré du premier et du deuxième support (100b, 200b), aucun mouvement relatif transversalement à la direction de coulissement entre le premier support (100a) et le deuxième support (200a).

19. Véhicule, de préférence véhicule utilitaire, comprenant :
a) un cadre porteur (2) qui comprend deux longerons de cadre (2a), de préférence des soutiens profilés en C, espacés l'un de l'autre et reliés entre eux par l'intermédiaire de plusieurs traverses ;
b) un réservoir (3) d'énergie d'entraînement, de préférence un réservoir d'énergie électrique ; et
c) un dispositif selon l'une quelconque des revendications 1 à 16 ou un système selon l'une quelconque des revendications 17 ou 18 ;
le premier support (100a ; 100b) étant fixé, de préférence goupillé et/ou vissé et/ou riveté, au longeron de cadre (2a) et le deuxième support (200a ; 200b) au réservoir.

20. Procédé pour fixer un réservoir (3) d'énergie d'entraînement, de préférence un réservoir (3) d'énergie électrique, sur un cadre porteur (2) d'un véhicule (1), comprenant les étapes suivantes :
la fourniture (S1) d'un dispositif selon l'une quelconque des revendications 1 à 16 ou d'un système selon l'une quelconque des revendications 17 ou 18 ;
la fixation (S2) du premier support (100a ; 100b) au cadre porteur (2) ;
la fixation (S3) du deuxième support (200a ; 200b) au réservoir (3) ; et
la fixation (S4) du réservoir (3) au cadre porteur (2) par enfilage, enfichage et/ou encliquetage du deuxième support (200a ; 200b) sur le premier support (100a ; 100b).
